(19) Europäisches Patentamt
European Patent Office
Office européen des brevets

(11) **EP 4 586 173 A1**

(12) **EUROPEAN PATENT APPLICATION**
published in accordance with Art. 153(4) EPC

(43) Date of publication:
**16.07.2025 Bulletin 2025/29**

(21) Application number: **23914342.3**

(22) Date of filing: **17.10.2023**

(51) International Patent Classification (IPC):
**G06Q 20/40** *(2012.01)*

(52) Cooperative Patent Classification (CPC):
**H04L 9/50; G06F 16/22; G06F 16/27; G06Q 20/40; G06Q 40/04; H04L 9/3236**

(86) International application number:
**PCT/CN2023/124962**

(87) International publication number:
**WO 2024/146204 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2023 CN 202310012842**

(71) Applicant: **Tencent Technology (Shenzhen) Company Limited**
**Shenzhen, Guangdong 518057 (CN)**

(72) Inventor: **ZHENG, Weilin**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **RESOURCE PROCESSING METHOD AND APPARATUS, AND COMPUTER DEVICE AND BLOCKCHAIN SYSTEM**

(57) A resource processing method, comprising: receiving a first cross-chain proof sent by a node of a first blockchain, wherein the first cross-chain proof carries a first resource transfer record that has been on-chained to the first block chain; performing validity verification on the first resource transfer record on the basis of a feature-tree root feature in each second block header in a second block chain; and when a verification result indicates that the first resource transfer record passes the verification, from a second preset account which corresponds to a first preset account and is in the second blockchain, unlocking a second resource which is determined according to a first resource, and transferring the second resource. The present application further relates to a resource processing apparatus, a computer device and a blockchain system.

Operation 302

Receive a first cross-chain proof transmitted by a node on a first blockchain, the first cross-chain proof carrying a first resource transfer record that has been uploaded to the first blockchain

Operation 304

Verify validity of the first resource transfer record based on the feature tree root of each second block header in the second blockchain to obtain a first verification result

Operation 306

Unlock and transfer out, in response to the first verification result indicating a pass of the verification, a second resource determined according to the first resource, from a second preset account in the second blockchain that corresponds to the first preset account

FIG. 3

**Description**

RELATED APPLICATION

This application claims priority to Chinese Patent Application No. 2023100128428, filed on January 5, 2023 and entitled "RESOURCE PROCESSING METHOD AND APPARATUS, COMPUTER DEVICE, AND BLOCKCHAIN SYSTEM", which is incorporated herein by reference in its entirety.

FIELD OF THE TECHNOLOGY

The present disclosure relates to the field of blockchain technologies, and in particular, to a resource processing method and apparatus, a computer device, a storage medium, a computer program product, and a blockchain system.

BACKGROUND OF THE DISCLOSURE

With the development of blockchain technologies, sidechain technologies have emerged. A sidechain refers to a blockchain that operates independently of a mainchain. By constructing the sidechain and the mainchain for cross-chain interactions, a cross-chain resource transfer, cross-chain data sharing or the like can be achieved. Typically, a two-way pegging mechanism can be employed to achieve the cross-chain resource transfer. Taking the cross-chain resource transfer from the mainchain to the sidechain as an example, resources are locked in the mainchain, and then equivalent resources that are equivalent to the locked resources are generated on the sidechain, thereby transferring the resources from the mainchain to the sidechain.
In the related art, to confirm that the resources have been locked, nodes on the blockchain receiving the cross-chain transfer need to verify the locking status of the resources. However, the problem of high verification overhead often exists, leading to low cross-chain performance.

SUMMARY

According to embodiments provided in the present disclosure, a resource processing method and apparatus, a computer device, a computer-readable storage medium, and a computer program product are provided.
In one aspect, the present disclosure provides a resource processing method, executed by a node on a second blockchain, including:

receiving a first cross-chain proof transmitted by a node on a first blockchain, the first cross-chain proof carrying a first resource transfer record that has been uploaded to the first blockchain, the first resource transfer record stating that a first resource is transferred into a first preset account in the first blockchain and is locked, a plurality of first blocks existing in the first blockchain, a plurality of second blocks which are in one-to-one correspondence with the plurality of first blocks existing in the second blockchain, each second block and the first block corresponding to the second block being generated through the same proof-of-work result, and a second block header of each second block storing feature tree root information generated based on feature tree root information of the corresponding first block;

verifying validity of the first resource transfer record based on the feature tree root information of each second block header in the second blockchain to obtain a first verification result; and

unlocking and transferring out a second resource that matches with the first resource from a second preset account in the second blockchain corresponding to the first preset account when the first verification result indicates that the first resource transfer record is valid.

In another aspect, the present disclosure further provides a resource processing apparatus. The apparatus includes:

a cross-chain proof receiving module, configured to receive a first cross-chain proof transmitted by a node on a first blockchain, the first cross-chain proof carrying a first resource transfer record that has been uploaded to the first blockchain, the first resource transfer record stating that a first resource is transferred into a first preset account in the first blockchain and is locked, a plurality of first blocks existing in the first blockchain, a plurality of second blocks which are in one-to-one correspondence with the plurality of first blocks existing in the second blockchain, each second block and the first block corresponding to the second block being generated through the same proof-of-work result, and a second block header of each second block storing feature tree root information generated based on feature tree root information of the corresponding first block;

a verification module, configured to verify validity of the first resource transfer record based on the feature tree root information of each second block header in the second blockchain to obtain a first verification result; and

a resource transfer-out module, configured to unlock and transfer out a second resource that matches with the first resource from a second preset account in the second blockchain corresponding to the first preset account when the first verification result indicates that the first resource transfer record is valid.

In another aspect, the present disclosure further provides a computer device. The computer device includes a memory and a processor. The memory has computer-readable instructions stored therein. The processor, when executing the computer-readable instructions, implements the operations of the above resource processing method.
In another aspect, the present disclosure further provides a computer-readable storage medium. The computer-readable storage medium has computer-readable instructions stored therein. The computer-readable instructions, when executed by a processor, implement the operations of the above resource processing method.
In another aspect, the present disclosure further provides a computer program product. The computer program product includes computer-readable instructions. The computer-readable instructions, when executed by a processor, implement the operations of the above resource processing method.
According to the embodiments provided in the present disclosure, another resource processing method and apparatus, a computer device, a computer-readable storage medium, and a computer program product are further provided.
In another aspect, the present disclosure further provides another resource processing method, executed by a node on a first blockchain, including:

transferring a first resource to be transferred in a first blockchain into a first preset account for locking, generating a corresponding first resource transfer record, and uploading the first resource transfer record to the first blockchain, a plurality of first blocks existing in the first blockchain, a plurality of second blocks which are in one-to-one correspondence with the plurality of first blocks existing in the second blockchain, each second block and the first block corresponding to the second block being generated through the same proof-of-work result, and a second block header of each second block storing feature tree root information generated based on feature tree root information of the corresponding first block; and

transmitting a first cross-chain proof carrying the first resource transfer record to a node on the second blockchain,

the first cross-chain proof being configured for instructing the node on the second blockchain to verify validity of the first resource transfer record based on the feature tree root information of each second block header in the second blockchain to obtain a first verification result, and unlock and transfer out a second resource that matches with the first resource from a second preset account in the second blockchain corresponding to the first preset account when the first verification result indicates that the first resource transfer record is valid.

In another aspect, the present disclosure further provides a resource processing apparatus. The apparatus includes:

a resource transfer-in module, configured to transfer a first resource to be transferred in a first blockchain into a first preset account for locking, generate a corresponding first resource transfer record, and upload the first resource transfer record to the first blockchain; and

a cross-chain proof transmitting module, configured to transmit a first cross-chain proof carrying the first resource transfer record to a node on a second blockchain,

a plurality of first blocks existing in the first blockchain, a plurality of second blocks which are in one-to-one correspondence with the plurality of first blocks existing in the second blockchain, each second block and the first block corresponding to the second block being generated through the same proof-of-work result, and a second block header of each second block storing a feature tree root information generated based on feature tree root information of the corresponding first block; and the first cross-chain proof being configured for instructing the node on the second blockchain to verify validity of the resource transfer record based on the feature tree root information of each second block header in the second blockchain to obtain a first verification result, and unlock and transfer out a second resource that matches with the first resource from a second preset account in the second blockchain corresponding to the first preset account when the first verification result indicates that the first resource transfer record is valid. In another aspect, the present disclosure further provides a computer device. The computer device includes a memory and a processor. The memory has computer-readable instructions stored therein. The processor, when executing the computer-readable instructions, implements the operations of the above resource processing method.

In another aspect, the present disclosure further provides a computer-readable storage medium. The computer-readable storage medium has computer-readable instructions stored therein. The computer-readable instructions, when executed by a processor, implement the operations of the above resource processing method.

In another aspect, the present disclosure further provides a computer program product. The computer program product includes computer-readable instructions. The computer-readable instructions, when executed by a processor, implement the operations of the above resource processing method.

In another aspect, the present disclosure further provides a blockchain system. A plurality of first blocks exist in the first blockchain, a plurality of second blocks which are in one-to-one correspondence with the plurality of first blocks exist in a second blockchain, each second block and the first block corresponding to the second block are generated through the same proof-of-work result, and a second block header of each second block stores feature tree root information generated based on feature tree root information of the corresponding first block.

Details of one or more embodiments of the present disclosure are provided in the accompanying drawings and descriptions below. Other features, objectives, and advantages of the present disclosure become clear from the specification, the accompanying drawings, and the claims.

BRIEF DESCRIPTION OF THE DRAWINGS

To describe the technical solutions in the embodiments of the present disclosure or the conventional technology more clearly, the following briefly describes the accompanying drawings required for describing the embodiments or the conventional technology. It is clear that the accompanying drawings in the following descriptions show merely embodiments of the present disclosure, and a person of ordinary skill in the art may still derive other accompanying drawings from the disclosed accompanying drawings without creative efforts.

FIG. 1A is a schematic diagram of a blockchain system according to an embodiment.

FIG. 1B is a schematic diagram of a structure of a blockchain according to an embodiment.

FIG. 1C is a schematic diagram of a process of generating a block according to an embodiment.

FIG. 2 is a diagram of an application environment of a resource processing method according to an embodiment.

FIG. 3 is a schematic flowchart of a resource processing method according to an embodiment.

FIG. 4 is a schematic diagram of a relationship between a first blockchain and a second blockchain according to an embodiment.

FIG. 5 is a schematic diagram of generating a common Merkle root according to another embodiment.

FIG. 6 is a schematic flowchart of a resource processing method according to another embodiment.

FIG. 7 is a schematic diagram of an overall flow of a resource processing method according to another embodiment.

FIG. 8 is a schematic diagram of a structure of a block header shared by a mainchain and a sidechain according to an embodiment.

FIG. 9 is a block diagram of a structure of a resource processing apparatus according to an embodiment.

FIG. 10 is a block diagram of a structure of a resource processing apparatus according to another embodiment.

FIG. 11 is a diagram of an internal structure of a computer device according to an embodiment.

FIG. 12 is a diagram of an internal structure of a computer device according to another embodiment.

DESCRIPTION OF EMBODIMENTS

The technical solutions in embodiments of the present disclosure are clearly and completely described below with reference to the accompanying drawings in the embodiments of the present disclosure. It is clear that the described embodiments are merely some rather than all of the embodiments of the present disclosure. All other embodiments obtained by a person of ordinary skill in the art based on the embodiments of the present disclosure without creative efforts shall fall within the protection scope of the present disclosure.

A resource processing method according to an embodiment of the present disclosure relates to a blockchain technology. A blockchain refers to a chain structure where blocks are sequentially connected in a time sequence through hash values, and the structure is called the blockchain. The block records resource transfer records and state results that occur within a period of time, with a single block potentially containing a plurality of resource transfer records. The blockchain is viewed as a distributed ledger, a resource transfer represents an operation that modifies the ledger, leading to a change in the ledger state. A single block represents a consensus on the ledger state among nodes in the blockchain, which is packaged (generated) by a node that has obtained the right to record (a block generation node), and may be independently verified by each node.

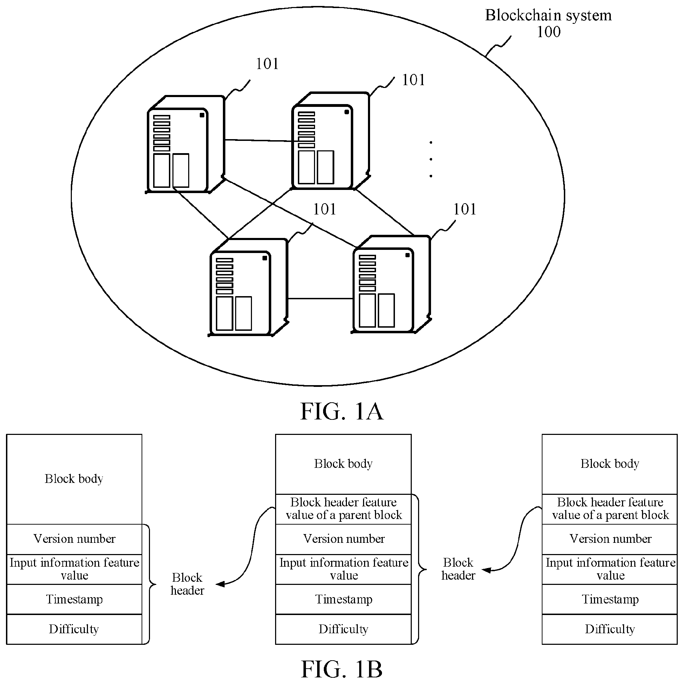

Typically, the blockchain may not only refer to the data structure itself, but also refer to the entire blockchain system. Referring to a blockchain system illustrated in FIG. 1A, a blockchain system 100 may include a plurality of nodes 101. Each node 101 may receive input information during normal operation, and may upload the input information to the blockchain. Herein, the input information may be, for example, a resource transfer record. To ensure information exchange within the blockchain system, there may be an information connection between the nodes in the blockchain system, and therefore the nodes may transmit information through the above information connection. For example, when any node within the blockchain system receives the input information, other nodes in the blockchain system acquire the input information based on a consensus algorithm, and the input information is stored as data in shared data, thereby ensuring consistency of the data stored on all the nodes within the blockchain system.

Each node in the blockchain system has a corresponding node identifier, and may store node identifiers of the other nodes in the blockchain system, thereby subsequently broadcasting generated blocks to the other nodes in the blockchain system according to the node identifiers of the other nodes. Each node may maintain a node identifier list as shown in the table below, and node names and node identifiers are correspondingly stored in the node identifier list. The node identifier may be an Internet protocol (IP, a protocol for network interconnection) address or any other information for identifying the node, and in the table 1, only the IP address is used as an example for description.

Table 1

| Node name | Node identifier |
|---|---|
| Node 1 | XXX. XXX. XXX. XXX |
| Node 2 | XXX. XXX. XXX. XXX |
| ... | ... |
| Node N | XXX. XXX. XXX. XXX |

Each node in the blockchain system stores the same blockchain. The blockchain is composed of a plurality of blocks. Referring to FIG. 1B, the blockchain is composed of a plurality of blocks, and a genesis block includes a block header and a block body, where the block header stores an input information feature value, a version number, a timestamp, and a difficulty, and the block body stores input information. A next block of the genesis block considers the genesis block as a parent block, and also includes a block header and a block body. The block header stores an input information feature value of a current block, a block header feature value of the parent block, a version number, a timestamp, and a difficulty. By analogy, block data stored in each block in the blockchain is associated with block data stored in the parent block, thereby ensuring the security of the input information within the blocks.

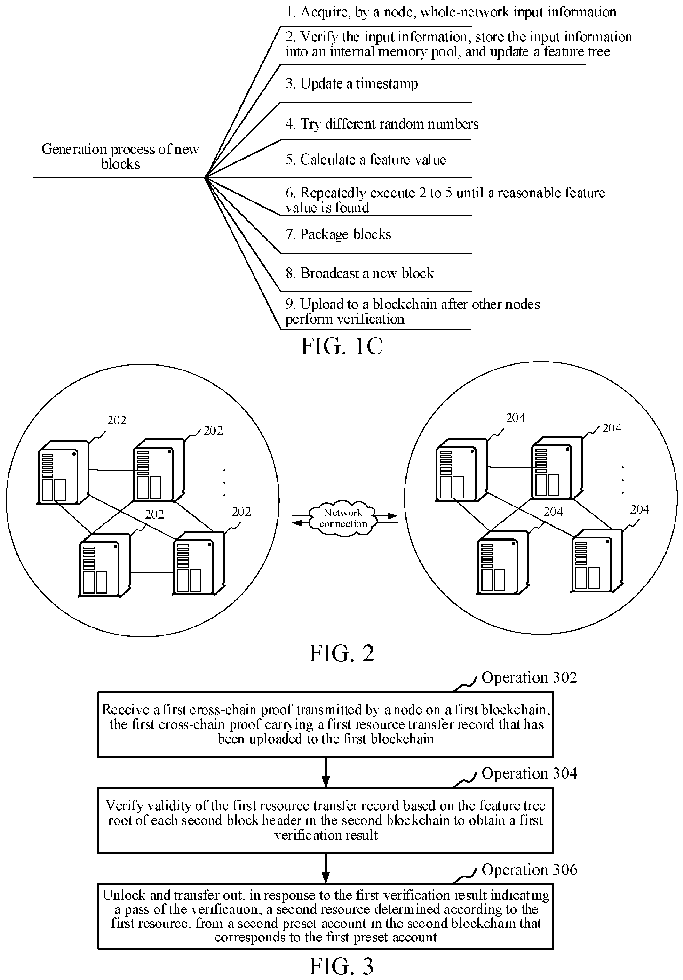

When generating the blocks within the blockchain, referring to FIG. 1C, when receiving the input information, a node on the blockchain verifies the input information, and after verification is finished, the input information is stored in an internal memory pool, and a feature tree for recording the input information of the node is updated. Then, the timestamp is updated to the time when the input information is received, an attempt on different random numbers is made, feature value calculation is performed many times, and therefore a calculated feature value may satisfy the following formula:

$$SHA\,256(SHA\,256(version + prev\_hash + merkle\_root + ntime + nbits + x)) < TARGET$$

where *SHA256* is a feature value algorithm used for calculating the feature value; *version* (version number) is version information of related block protocols in the blockchain; *prev_hash* is a block header feature value of the parent block of the current block; *merkle_root* is a feature value of the input information; *ntime* is updating time for updating the timestamp; *nbits* is the current difficulty, which is a constant value within a period of time and is determined again after a fixed time period ; *x* is a random number; and *TARGET* is a feature value threshold, which may be determined according to *nbits.*

Accordingly, when the random number satisfying the above formula is calculated, information may be correspondingly stored to generate the block header and the block body, thereby obtaining the current block. Then, the node on the blockchain transmits the newly-generated block to the other nodes in the blockchain system where the node is located according to the node identifiers of the other nodes in the blockchain system, and the other nodes verify the newly-generated block and add the newly-generated block to the blockchain stored by the nodes upon verification, thereby completing the process of uploading the input information to the blockchain.

The resource processing method according to the embodiment of the present disclosure may be applied to an application environment illustrated in FIG. 2. A node 202 on a first blockchain communicates with a node 204 on a second blockchain through a network. The node on the second blockchain may receive a cross-chain proof transmitted by the node on the first blockchain, the cross-chain proof carries a resource transfer record, and the resource transfer record is configured for stating that a first resource is transferred into a first preset account in the first blockchain and is locked. Since each first block in the first blockchain has a corresponding second block in the second blockchain, that is generated through the same proof-of-work result, and a second block header of each second block stores a feature tree root feature (i.e., feature tree root information) generated based on feature tree root information of the corresponding first block, the node on the second blockchain may verify validity of a first resource transfer record based on the feature tree root feature of each second block header of the second blockchain to obtain a verification result. When the verification result indicates that the first resource transfer record is valid, the node on the second blockchain may unlock and transfer out a second resource that matches with the first resource from a second preset account in the second blockchain corresponding to the first preset account, thereby transferring the resource from the first blockchain to the second blockchain.

The node 202 on the first blockchain and the node 204 on the second blockchain may be terminals or servers. The terminals may be, but are not limited to, various desktop computers, notebook computers, smartphones, tablet computers, Internet of Things devices, and portable wearable devices. The Internet of Thing devices may be a smart speaker, a smart television, a smart air conditioner, a smart in-vehicle device, or the like. The portable wearable devices may be a smart watch, a smart band, a head-mounted device, or the like. The servers may be implemented by using an independent server, or a server cluster composed of a plurality of servers.

The application environment illustrated in FIG. 2 is not intended to limit the present disclosure. In some other embodiments, there may be one or more common nodes between the first blockchain and the second blockchain. More refers to at least two.

In an embodiment, as illustrated in FIG. 3, a resource processing method is provided. An example in which the method is applied to the node 204 on the second blockchain in FIG. 2 is used for description. The method includes the following operations.

Operation 302: Receive a first cross-chain proof transmitted from a node on a first blockchain to the node on the second blockchain. The first cross-chain proof carries a first resource transfer record that has been uploaded to the first blockchain.

The first blockchain and the second blockchain are two independently operating block chains. In some embodiments, the first blockchain may be a mainchain, and the second blockchain may be a sidechain. Alternatively, the second blockchain may be a mainchain, and the first blockchain may be a sidechain. The mainchain is a trusted blockchain network that is recognized by a blockchain community and may operate independently. The sidechain is a general term for all blockchains that adhere to a sidechain protocol. The sidechain aims to achieve two-way pegging, allowing resources to be "transferred" between the mainchain and the sidechain. The sidechain protocol refers to: a protocol that may allow the resources to be securely transferred from the mainchain to other blockchains and securely returned to the mainchain from the other blockchains. The sidechain itself may also be understood as a mainchain. If a mainchain complies with the sidechain protocol, the mainchain may also be called a sidechain.

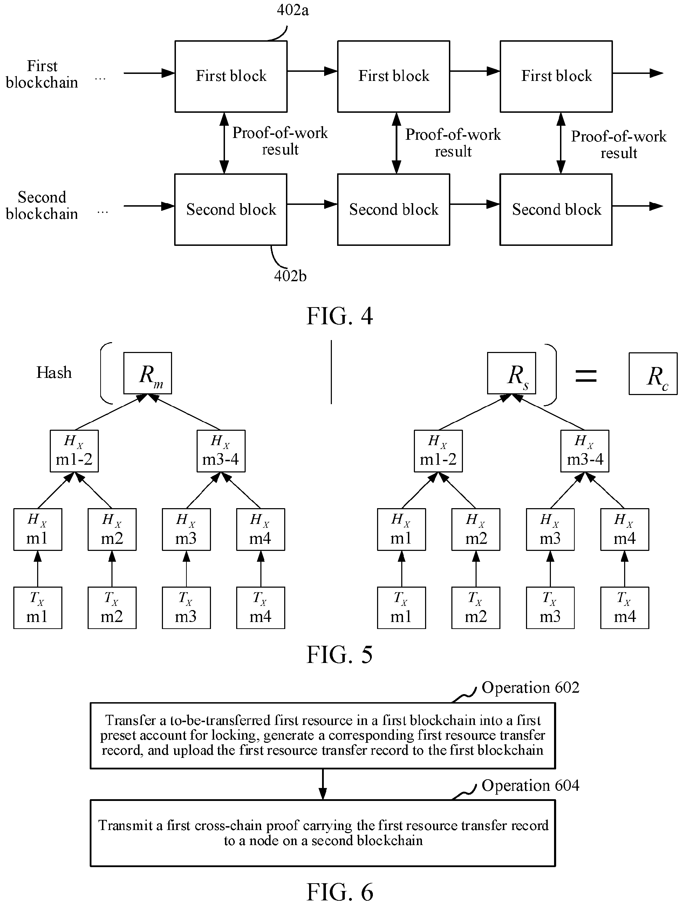

A plurality of first blocks exist in the first blockchain, and a plurality of second blocks which are in one-to-one correspondence with the plurality of first blocks exist in the second blockchain. Each second block and the first block corresponding to the second block are generated through the same proof-of-work result. The first blockchain and the second blockchain may adopt a joint generation mechanism to jointly generate the blocks. After a node on one blockchain obtains the proof-of-work result, the proof-of-work result may be transmitted to the other blockchain, thereby allowing a node on the other blockchain to use the same proof-of-work result to generate a block. Herein, the proof-of-work result may be understood as a calculated random number that satisfies a difficulty requirement in a proof-of-work process. Two blocks uploaded through the same proof-of-work result are two mutually corresponding blocks. Referring to FIG. 4, illustrating a schematic diagram of a relationship between a first blockchain and a second blockchain according to an embodiment, a first block 402a in the first blockchain and a second block 402b in the second blockchain are generated through the same proof-of-work result, such that the first block 402a is the corresponding block of the second block 402b.

In some embodiments, an example in which a node on the first blockchain obtains a proof-of-work result is used, and after receiving input information, the node on the first blockchain verifies the input information, stores the input information to an internal memory pool upon verification, and updates a feature tree for recording the input information of the node; and then, a timestamp is updated to the time when the input information is received, an attempt on different random numbers is made, feature value calculation is performed many times, and therefore a calculated feature value may be less than a feature value threshold. For a feature value calculation method, reference may be made to the above consensus. When the random number satisfying the above formula is calculated, namely, the proof-of-work result is obtained, accordingly, a block header and a block body may be generated based on the proof-of-work result, the input information, etc., thereby obtaining a current block. Then, the node on the first blockchain transmits the newly-generated block to other nodes in the blockchain system where the node is located according to node identifiers of the other nodes in the blockchain system, and the other nodes verify the newly-generated block and add the newly-generated block to the blockchain stored by the nodes upon verification, thereby completing the process of uploading the input information.

The node on the first blockchain may also transmit the proof-of-work result to the node on the second blockchain, such that the node on the second blockchain may generate a block header and a block body according to the received proof-of-work result, the input information, etc., thereby obtaining a current block.

The feature tree root information refers to tree root information of the feature tree in the block. The feature tree may organize and save feature values of data packaged in the block in a tree form. In some embodiments, the feature tree is a Merkle tree, and the feature values are hash values of data packaged in the block. In the blockchain, each block saves the feature tree, and the feature tree root information of the feature tree is saved in the block header of the block. According to the embodiment of the present disclosure, in the process of joint block generation, each time the node on the first blockchain generates a first block, feature tree root information in the first block may be transmitted to the node on the second blockchain. Therefore, the node on the second blockchain may generate a feature tree root feature based on the feature tree root information and store the feature tree root information in a block header of a currently generated second block. In this way, the block header of the second block cannot only express the feature tree root information of the feature tree in the block, but also express the feature tree root information of the corresponding first block. The feature tree root feature in the present disclosure can also be referred to as feature tree root information.

The feature tree root feature stored in the block header of the second block may be data in the second block that is configured for expressing the feature tree root information of the first block corresponding to the second block. As an exemplary implementation, the node on the second blockchain considers the feature tree root information of the first block as the feature tree root feature, such that the node on the second blockchain may directly save the feature tree root information transmitted by the node on the first blockchain in the block header of the second block and mark the feature tree root information to distinguish it from the feature tree root information of the current block. In another exemplary implementation, the node on the second blockchain may also compress the feature tree root information transmitted by the node on the first blockchain for storage. In some embodiments, compressing the feature tree root information transmitted by the node on the first blockchain may be hash value calculation on the feature tree root information, and a calculated hash value is saved in the block header as the feature tree root feature, and by calculating and saving the hash value, the internal memory overhead may be saved. In another exemplary implementation, the node on the second blockchain may fuse the feature tree root information transmitted by the node on the first blockchain and the feature tree root information of the current block, and data obtained after fusion is used as the feature tree root feature, such that in the block header of the second block, the feature tree root information transmitted by the node on the first blockchain and the feature tree root information of the current block may be simultaneously expressed only by using one feature tree root feature, thereby better saving the internal memory overhead.

The first cross-chain proof is transmitted from the node on the first blockchain to the node on the second blockchain. The first cross-chain proof carries the first resource transfer record that has been uploaded to the first blockchain. The resource transfer record refers to a data record generated in a resource transfer process, such as transaction data generated in a transaction process. The resources refer to items that may be circulated through the network, including at least one of virtual items and physical items. Specifically, the virtual items may include, but are not limited to, at least one of account values of various accounts, funds, stocks, bonds, virtual avatar products, virtual recharge cards, game equipment, etc. The physical items may be any items that can be owned by a user and have a physical form, specifically including but not limited to electronic products, toys, handicrafts, and autographed photos. Resource transfer may refer to transferring the resources from one storage medium to another storage medium, transferring resource values corresponding to the resources out of one account, or transferring the resource values corresponding to the resources into one account. The first resource transfer record is configured for representing that the first resource is transferred into the first preset account in the first blockchain and is locked. Namely, the resource transfer stated by the first resource transfer record is the transfer of the first resource into the first preset account in the first blockchain. The resource will be locked after being transferred into the first preset account. In a locking period, the resource cannot be transferred again on the first blockchain. In some embodiments, the resource transfer stated by the first resource transfer record is specifically transfer-out from a first target account of a target user in the first blockchain. Namely, the first resource is transferred out of the first target account, and then transferred into the first preset account to be locked. A specific value of the first resource may be determined according to a resource transfer request of the target user. The first preset account in the first blockchain refers to a pre-specified account address in the first blockchain. Exemplarily, the account address may deploy a smart contract. When a resource transfer instruction initiated by the user requires cross-chain resource transfer to the second blockchain, the smart contract is executed to transfer the resource out from the account address of the user in the first blockchain to the specified account address, and lock the resource.

In an embodiment, the node on the first blockchain may receive the resource transfer request transmitted by the target user, transfer the first resource out of the first target account of the target user in the first blockchain according to the resource transfer request, transfer the first resource into the first preset account in the first blockchain and lock the first resource, and generate the first resource transfer record in the resource transfer process. The node on the first blockchain may further package the first resource transfer record to generate the first block, and upload the first block to the first blockchain. After a confirmation period, the node on the first blockchain may transmit the first cross-chain proof to the node on the second blockchain to prove to the node on the second blockchain that the first resource of the target user in the first blockchain has been locked. After receiving the first cross-chain proof, the node on the second blockchain may parse the first cross-chain proof to obtain the carried first resource transfer record. Subsequently, the node on the second blockchain needs to verify the validity of the first resource transfer record to ensure that the first resource has been truly locked to prevent the phenomenon of double-spending.

Operation 304: Verify validity of the first resource transfer record based on the feature tree root feature of each second block header in the second blockchain to obtain a first verification result.

The first verification result includes one of a result indicating a pass of the verification (that is, the first resource transfer record is valid) or a result indicating a failure of the verification (that is, the first resource transfer record is invalid). The validity verification refers to verifying whether the first resource transfer record is valid. When the block where the first resource transfer record is located has been confirmed by a sufficient number of blocks in the first blockchain, the first resource transfer record is valid.

In an embodiment, since the first blockchain and the second blockchain generate the blocks using the joint generation mechanism, each time a first block is generated in the first blockchain, a corresponding second block is generated in the second blockchain. A block header of the second block stores a feature tree root feature generated based on feature tree root information of the corresponding first block. Namely, the block headers in the second blockchain may fully represent a connection relationship between the block headers in the first blockchain and the feature tree root information in each block header, thereby allowing the node on the second blockchain to verify the validity of the first resource transfer record based on the second block headers in the second blockchain, so as to obtain the first verification result.

In an implementation, the first cross-chain proof further carries feature description information of the first resource transfer record in the first block where the first resource transfer record is located. Based on the feature description information, the node on the second blockchain may determine the feature tree root information of the first block where the first resource transfer record is located, thereby positioning a target block header that incorporates the feature tree root information of the first block where the first resource transfer record is located from the second block headers in the second blockchain, and then obtaining the first verification result based on a positioning result. If the node on the second blockchain fails to position the target block header, namely, there is no block header that incorporates the feature tree root information of the first block where the first resource transfer record is located from the block headers in the second blockchain, the obtained first verification result is a result indicating that the first resource transfer record is invalid.

Operation 306: when the first verification result indicates that the first resource transfer record is valid, unlock and transfer out a second resource that matches with the first resource from a second preset account in the second blockchain corresponding to the first preset account.

The second preset account is a preset account in the second blockchain, and corresponds to the first preset account. When the first resource is locked in the first preset account, the second resource that matches with the first resource may be unlocked from the second preset account. The second resource is equivalent to the first resource. The first resource is a resource in the first blockchain, while the second resource refers to a resource in the second blockchain, thereby allowing for the conversion of the resource in the first blockchain to the resource in the second blockchain and transfer within the second blockchain. The first resource in the first blockchain and the second resource in the second blockchain may be the same or different resources.

In an embodiment, when a terminal of the target user transmits the resource transfer request to the node on the first blockchain, a target account for resource transfer may be specified, namely an account that finally receives the transferred resource, where the target account is an account in the second blockchain. In some embodiments, the target account is an account of the target user in the second blockchain. In this case, the cross-chain resource transfer may be understood as transferring the resource of the target user in the first blockchain to the second blockchain for continued use. In other embodiments, the target account is an account of another user in the second blockchain, other than the target user. In this case, the cross-chain resource transfer may be understood as transferring the resource of the target user in the first blockchain to the another user in the second blockchain.

According to the above resource processing method, the first cross-chain proof transmitted from the node on the first blockchain to the node on the second blockchain is received, the first cross-chain proof carries the first resource transfer record that has been uploaded to the first blockchain, and the first resource transfer record is configured for representing that the first resource is transferred into the first preset account in the first blockchain and is locked. Since each first block in the first blockchain has the corresponding second block in the second blockchain, that is generated through the same proof-of-work result, and the second block header of each second block stores the feature tree root feature generated based on the feature tree root information of the corresponding first block, the node on the second blockchain may verify, based on the second block headers in the second blockchain, the validity of the resource transfer record carried in the cross-chain proof. When the verification result indicates that the first resource transfer record is valid, the second resource that matches with the first resource is unlocked and transferred out of the second preset account in the second blockchain corresponding to the first preset account, thereby achieving a cross-chain resource transfer. Since the second block header of the second block stores the feature tree root feature generated based on the feature tree root information of the corresponding first block, in the cross-chain process, the block header of the second blockchain may be used to verify the resource transfer record in the first blockchain without acquiring the block headers in the first blockchain from the node on the first blockchain, thereby saving performance overhead caused by acquiring the block headers in the first blockchain, achieving high verification efficiency, and then improving cross-chain performance.

In an embodiment, the operation of verifying validity of the first resource transfer record based on the feature tree root features in the second block headers in the second blockchain to obtain a first verification result includes: determining a target block header from the second block headers in the second blockchain; generating a feature tree root feature stored in the target block header based on the feature tree root information of the first block where the first resource transfer record is located; determining, based on a position of the target block header in the second blockchain, block confirmation information of the first block where the first resource transfer record is located in the first blockchain; and performing verification based on the block confirmation information to obtain the first verification result.

The block confirmation information for a certain block refers to the number of blocks that have confirmed that block within the blockchain. In a chain structure of the blockchain, once a block is uploaded, all subsequent blocks that are uploaded are considered as confirmations of that block. For example, if a resource transfer record is recorded in a block No. 502 and a length of a current blockchain is 507, the resource transfer record held by the block 502 has been confirmed 5 times. The reason it is called a confirmation is that each block added after the current added block confirms the consensus on the entire resource transfer record and the block recording the resource transfer record. The more confirmations there are, the deeper the block is embedded in the blockchain, thereby making the block harder to attack and thus increasing the reliability of the resource transfer record held by the block.

In an embodiment, since the second blockchain and the first blockchain are obtained through the joint generation mechanism, as long as the target block header storing the feature tree root feature generated based on the feature tree root information of the first block where the first resource transfer record is located is positioned in the second blockchain, the block confirmation information of the block where the target block header is located in the second blockchain may be equivalent to the block confirmation information of the first block where the first resource transfer record is located in the first blockchain. Therefore, the node on the second blockchain may determine the target block header storing the feature tree root feature generated based on the feature tree root information of the first block where the first resource transfer record is located from the second block headers in the second blockchain. Based on the position of the second block where the target block header is located in the second blockchain, the number of second blocks connected behind the second block where the target block header is located is determined, and the number of the connected second blocks is determined as the number of confirmation blocks for the second block where the target block header is located in the second blockchain. The number represents the block confirmation information of the first block where the first resource transfer record is located in the first blockchain. Then, the node on the second blockchain may perform validity verification based on the block confirmation information to obtain the first verification result.

In the above embodiment, since the target block header may be determined from the second block headers in the second blockchain, the block confirmation information may be obtained based on the position of the target block header in the second blockchain, and verification may be performed without acquiring a block header list of the first blockchain, thereby improving the verification efficiency.

In an embodiment, the operation of verifying validity of the first resource transfer record based on the feature tree root features in the second block headers in the second blockchain to obtain a first verification result includes: performing verification based on the block confirmation information to obtain the verification result, including: obtaining the first verification result indicating that the first resource transfer record is valid when the number of confirmation blocks represented by the block confirmation information is equal to or greater than a preset quantity threshold; and obtaining the first verification result indicating that the first resource transfer record is invalid when the number of confirmation blocks represented by the block confirmation information is less than the preset quantity threshold.

The confirmation blocks refer to blocks that are uploaded after block confirmation, and the number of the confirmation blocks is the number of blocks for confirmation. The preset quantity threshold may be set as needed, such as 6.

In an embodiment, since the block confirmation information represents the number of confirmation blocks, and the more the confirmation blocks there are, the higher the reliability is, a quantity threshold may be preset. When the number of confirmation blocks represented by the block confirmation information is equal to or greater than the preset quantity threshold, it may be determined that the block to be confirmed has been confirmed by sufficient blocks, and therefore the first verification result indicating a pass of the verification may be obtained. When the number of confirmation blocks represented by the block confirmation information is less than the preset quantity threshold, there are not enough blocks confirming the block to be confirmed, and the block to be confirmed is at risk of being attacked, thereby obtaining the first verification result indicating a failure of the verification. In this embodiment, the block to be confirmed refers to the second block where the target block header is located.

In the above embodiment, the verification result is obtained according to a relationship between the number of confirmation blocks represented by the block confirmation information and the preset quantity threshold, thereby rapidly obtaining the verification result and further improving the verification efficiency.

In an embodiment, determining a target block header containing feature tree root information of a first block where a first resource transfer record is located from second block headers in a second blockchain includes: fusing, according to a preset fusion mode, feature tree root information of a feature tree where the first resource transfer record is located and feature tree root information of a second block corresponding to the first block where the first resource transfer record is located to obtain current feature information; comparing the current feature information with a feature tree root feature stored in each second block header to obtain a comparison result corresponding to each second block header; and determining the second block header whose corresponding comparison result indicating a match/consistency between the current feature information and the feature tree root information, as the target block header.

The feature tree root feature stored in the second block header of the second block is obtained by fusing the feature tree root information of the second block and the feature tree root information of the corresponding first block according to the preset fusion mode. Namely, in this embodiment, a mode for generating the feature tree root feature according to the feature tree root information of the first block includes: fusing the feature tree root information in the second block header of the second block and the feature tree root information of the corresponding first block according to the preset fusion mode. The fusion herein may be a process of expressing a plurality of pieces of information with a single piece of information, i.e., expressing the feature tree root information in the second block header of the second block and the feature tree root information of the corresponding first block with a single piece of information. Exemplarily, the preset fusion mode may involve concatenating the feature tree root information in the second block header of the second block with the feature tree root information of the corresponding first block, or performing an operation on the feature tree root information in the second block header of the second block and the feature tree root information of the corresponding first block according to a preset mode, such as an addition operation and a multiplication operation. In some embodiments, a hash operation may be further performed on a result obtained from the concatenation or operation to obtain the feature tree root feature.

The first cross-chain proof further carries a feature tree path of a feature tree where the first resource transfer record is located. The feature tree path of the feature tree where the first resource transfer record is located refers to a path from a leaf node where the first resource transfer record is located in the feature tree to a feature root of the feature tree. The leaf node where the first resource transfer record is located may be a feature value configured for representing the first resource transfer record in the feature tree. In the Merkle tree, the leaf node where the first resource transfer record may be a hash value of the first resource transfer record. For example, as illustrated in FIG. 5, assuming that the first resource transfer record is Tx_m1 in FIG. 5, the feature tree path of the first resource transfer record may be Hx_m2-Hx_m3-4. The first cross-chain proof further carries the feature tree root information of the second block corresponding to the first block where the first resource transfer record is located. The feature tree root information of the second block corresponding to the first block where the first resource transfer record is located refers to the feature tree root information of the feature tree in the second block generated through the same proof-of-work result as the first block where the first resource transfer record is located.

In an embodiment, after receiving the first cross-chain proof, the node on the second blockchain may parse the first cross-chain proof to obtain the feature tree path of the feature tree where the first resource transfer record is located, as well as the feature tree root information of the second block corresponding to the first block where the first resource transfer record is located. Then, based on the feature tree path of the feature tree where the first resource transfer record is located, calculation is performed according to an organization mode of the feature tree to ultimately obtain a piece of feature tree root information. As in the above example, feature values Hx_m1 and Hx_m2 of Tx_m1 may be first concatenated to obtain Hx_m1-2, and then Hx_m1 -2 may be concatenated with Hx_m3-4 to obtain the feature tree root information.

Further, the node on the second blockchain fuses the feature tree root information of the feature tree where the first resource transfer record is located and the feature tree root information of the second block corresponding to the first block where the first resource transfer record is located according to the preset fusion mode to obtain current feature information. Herein, the preset fusion mode is the same as a fusion mode used in the block uploading process. Further, the node on the second blockchain compares the current feature information with the feature tree root feature of each second block header in the second blockchain, and determines the second block header where the consistently-compared feature tree root feature is located as the target block header. In some embodiments, in the comparison process, the node on the second blockchain may also use a mode such as a Bloom filter for assistance.

In the above embodiment, the current feature information may be calculated through the feature tree path and the feature tree root information carried in the first cross-chain proof, thereby rapidly positioning the target block header through comparison and further improving the verification efficiency.

In an embodiment, the operation of fusing, according to a preset fusion mode, feature tree root information of a feature tree where the first resource transfer record is located and feature tree root information of a second block corresponding to the first block where the first resource transfer record is located to obtain current feature information includes: concatenating the feature tree root information of the feature tree where the first resource transfer record is located and the feature tree root information of the second block corresponding to the first block where the first resource transfer record is located to obtain concatenated feature information; and performing the hash operation on the concatenated feature information to obtain the current feature information.

In this embodiment, a mode for generating the feature tree root feature according to the feature tree root information of the first block includes: concatenating the feature tree root information of the second block with the feature tree root information of the corresponding first block, then, performing the hash operation to obtain the feature tree root feature, and saving the feature tree root feature in the second block header of the second block. For example, referring to FIG. 5, assuming that the feature tree root information of the second block is Rm, and the feature tree root information of the corresponding first block is Rs, the feature tree root feature $Rc=Hash(Rm|Rs)$; $Hash()$ is a hash function, and a length of an output result of the hash function is consistent with a length of original feature tree root information; an "|" is a concatenation operator, representing the concatenation of two inputs. For example, $ab|cd$ refers to the concatenation of "ab" and "cd", resulting in "abcd".

In the verification process, since comparison is needed to position the target block header, the node on the second blockchain uses the same mode as in the block generation process for fusion. Therefore, the node on the second blockchain may concatenate the feature tree root information of the feature tree where the first resource transfer record is located with the feature tree root information of the second block corresponding to the first block where the first resource transfer record is located to obtain the concatenated feature information, and further perform the hash operation on the concatenated feature information to obtain the current feature information.

In the above embodiment, by concatenating the feature tree root information and performing the hash operation on the obtained concatenated feature information, the feature tree root feature is obtained. Since a finally obtained operation result has the same length as the original feature tree root information, storage overhead for the second block may be avoided, and during verification, the hash operation is also needed. Due to the irreversibility of the hash function, the accuracy of the verification process can be improved.

The above provides a specific explanation for the embodiment of the specific verification process for the resource transfer record. The subsequent embodiments will introduce an exemplary implementation for joint block generation by the first blockchain and the second blockchain.

In an embodiment, the resource processing method according to the present disclosure further includes: when the node on the first blockchain obtains the proof-of-work result, receiving the proof-of-work result transmitted by the node on the first blockchain, as well as first feature tree root information of a first block generated according to the proof-of-work result; using the proof-of-work result to generate a second block, generating a feature tree root feature according to the first feature tree root information, and storing the feature tree root feature in a block header of the second block to obtain an updated second block; and uploading the updated second block to the second blockchain.

In this embodiment, an example in which the first blockchain is the mainchain and the second blockchain is the sidechain is used for introducing an implementation of joint block generation, the sidechain serves as an auxiliary chain for the mainchain, and therefore the node on the mainchain provides the proof-of-work result while the node on the sidechain receives the proof-of-work result from the mainchain to generate the new second block and uploads it to the chain.

In an embodiment, when the node on the first blockchain obtains the proof-of-work result, a new first block may be packaged and generated using the proof-of-work result, and the node on the first blockchain may transmit the obtained proof-of-work result and first feature tree root information of the newly generated first block to the node on the second blockchain, such that the node on the second blockchain may use the received proof-of-work result to generate a new second block, and fuse the first feature tree root information into a block header of the second block to obtain an updated second block. The node on the second blockchain may further upload the newly generated second block to the second blockchain.

In the above embodiment, since the new second block may be generated using the proof-of-work result transmitted by the node on the mainchain and the block header of the newly generated second block stores the feature tree root feature generated based on the feature tree root information of the corresponding first block in the mainchain, the sidechain may completely save a block connection relationship and the feature tree root information of the mainchain.

In an embodiment, the resource processing method according to the present disclosure further includes: returning second feature tree root information of the generated second block to the node on the first blockchain to instruct the node on the first blockchain to generate a feature tree root feature according to the second feature tree root information, store the feature tree root feature to obtain an updated first block, and upload the updated first block to the first blockchain.

In this embodiment, considering that after the resource from the mainchain is transferred to the sidechain, there may still be a need to transfer the resource transferred to the sidechain back to the mainchain, in this case, the node on the sidechain may transmit the cross-chain proof to the mainchain, the mainchain may verify validity of the resource transfer record carried in the cross-chain proof transmitted by the sidechain, and to ensure the mainchain verification efficiency and improve the cross-chain performance from the sidechain to the mainchain, in the process of joint block generation, the first block of the mainchain may also store the feature tree root feature generated based on the feature tree root information of the corresponding second block in the sidechain.

In an embodiment, after the node on the second blockchain receives a proof-of-work result transmitted by the node on the first blockchain and a new second block is packaged and generated using the proof-of-work result, second feature tree root information of the second block may be returned to the node on the first blockchain, such that the node on the first blockchain may incorporate the received second feature tree root information into a block header of a currently generated first block to obtain an updated first block, and further, the node on the first blockchain may upload the updated first block to the first blockchain.

In the above embodiment, since the feature tree root information of the sidechain is incorporated into the block in the mainchain, when a cross-chain resource transfer is performed from the sidechain to the mainchain, the mainchain may perform efficient verification so as to improve the cross-chain performance from the sidechain to the mainchain.

In an embodiment, the resource processing method according to the present disclosure further includes: acquiring a remaining resource corresponding to the second resource which is transferred out, transferring the remaining resource into the second preset account for locking, generating a corresponding second resource transfer record, and uploading the second resource transfer record to the second blockchain using the proof-of-work result transmitted by the node on the first blockchain; and transmitting a second cross-chain proof carrying the second resource transfer record to the node on the first blockchain, where the second cross-chain proof is configured for instructing the node on the first blockchain to verify validity of the second resource transfer record based on the feature tree root feature of each first block header in the first blockchain to obtain a second verification result, and unlock and transfer out a resource that matches with the remaining resource from the first preset account in the first blockchain when the second verification result indicates a pass of the verification (that is, when the second verification result indicates that the second resource transfer record is valid).

In this embodiment, through the joint generation mechanism, the first block is generated in the first blockchain, and the second block is generated in the second blockchain. The second block stores the feature tree root feature generated based on the feature tree root information of the corresponding first block, and the first block also stores the feature tree root feature generated based on the feature tree root information of the corresponding second block. In some embodiments, Modes for generating feature tree root features in the first blockchain and the second blockchain may be the same or different. When the modes for generating feature tree root features are the same, two blocks having a correspondence in the first blockchain and the second blockchain may share the feature tree root features.

The resource transferred from the first blockchain to the second blockchain may be transferred back to the first blockchain from the second blockchain. Specifically, the node on the second blockchain may acquire the remaining resource of the second resource transferred out of the second preset account, transfer the remaining resource into the second preset account again for locking, and generate a resource transfer record for the current resource transfer. After receiving a proof of work transmitted by the node on the first blockchain, the node on the second blockchain may package the resource transfer record to generate a second block and upload the second block to the second blockchain. Then, the node on the second blockchain may transmit the second cross-chain proof carrying the second resource transfer record to the node on the first blockchain, and after receiving the second cross-chain proof, the node on the first blockchain may verify the carried second resource transfer record to obtain the second verification result. When the second verification result indicates a pass of the verification, the node on the first blockchain may unlock and transfer out the first resource equivalent to the remaining resource from the first preset account in the first blockchain, and the transferred-out resource may be transferred into the target account of the target user in the first blockchain again.

In the validity verification process, since the first block also stores the feature tree root feature generated based on the feature tree root information of the corresponding second block, the node on the first blockchain may verify validity of the second resource transfer record through the locally saved block headers in the first blocks, and position the target block header corresponding to the second resource transfer record from the block headers in the first blocks. The feature tree root feature of the target block header corresponding to the second resource transfer record is generated based on the feature tree root information of the second block where the second resource transfer record is located, thereby obtaining the block confirmation information according to the position of the target block header, and finally obtaining the second verification result according to the block confirmation information.

In the above embodiment, when the resource from the second blockchain is transferred back to the first blockchain, the node on the first blockchain may perform validity verification through the block headers in the first blockchain, thereby avoiding performance overhead caused by acquiring the block headers in the second blockchain for verification, achieving high verification efficiency, and then improving the cross-chain performance.

In an embodiment, as illustrated in FIG. 6, a resource processing method is provided. An example in which the method is applied to the node 202 on the first blockchain in FIG. 2 is used for description. The method includes the following operations.

Operation 602: Transfer a first resource to be transferred in the first blockchain into a first preset account for locking, generate a corresponding first resource transfer record, and upload the first resource transfer record to the first blockchain.

Operation 604: Transmit a first cross-chain proof to a node on a second blockchain through the node on the first blockchain.

A plurality of first blocks exist in the first blockchain, and a plurality of second blocks which are in one-to-one correspondence with the plurality of first blocks exist in the second blockchain, where each second block and the first block corresponding to the second block are generated through the same proof-of-work result, and a second block header of each second block stores a feature tree root feature generated based on feature tree root information of the corresponding first block; and the first cross-chain proof carries the first resource transfer record, and is configure for instructing the node on the second blockchain to verify validity of the resource transfer record based on the feature tree root feature of each second block header in the second blockchain to obtain a first verification result, and unlock and transfer out a second resource that matches with the first resource from a second preset account in the second blockchain corresponding to the first preset account when the first verification result indicates a pass of the verification.

For a detailed explanation of this embodiment, reference may be made to the above embodiments.

According to the above resource processing method, since each first block in the first blockchain has a corresponding second block in the second blockchain, that is generated through the same proof-of-work result, and the second block header of each second block stores the feature tree root feature generated based on the feature tree root information of the corresponding first block, the node on the second blockchain may verify the resource transfer record carried in the cross-chain proof based on the second block headers in the second blockchain, such that when the node on the first blockchain transmits the cross-chain proof, there is no need to transmit block header information of the first blockchain, thereby saving performance overhead when transmitting the cross-chain proof, and improving the cross-chain performance.

In an embodiment, a first block header of each first block in the first blockchain stores the feature tree root feature generated based on the feature tree root information of the corresponding second block. The method further includes: receiving a second cross-chain proof transmitted by the node on the second blockchain, where the second cross-chain proof carries a second resource transfer record that has been uploaded to the first blockchain and states/documents that a remaining resource corresponding to the second resource is transferred into the second preset account and is locked; verifying validity of the second resource transfer record based on the feature tree root feature of each first block header in the first blockchain to obtain a second verification result; and unlocking and transferring out a resource that matches with the first resource from the second preset account in the second blockchain corresponding to the first preset account when the second verification result indicates a pass of the verification.

In an embodiment, the verifying validity of the second resource transfer record based on the feature tree root feature of each first block header in the first blockchain to obtain a second verification result includes: determining a target block header corresponding to the second resource transfer record from the first block headers in the first blockchain, where a feature tree root feature stored in the target block header corresponding to the second resource transfer record is generated based on the feature tree root information of the second block where the second resource transfer record is located; determining, based on a position of the target block header corresponding to the second resource transfer record in the first blockchain, block confirmation information of the second block where the second resource transfer record is located in the second blockchain; and obtaining the second verification result indicating a pass of the verification when the number of confirmation blocks represented by the block confirmation information is equal to or greater than a preset quantity threshold.

In an embodiment, the feature tree root feature stored in the first block header of the first block is obtained by fusing the feature tree root information of the first block and the feature tree root information of the corresponding second block according to a preset fusion mode; the second cross-chain proof further carries a feature tree path of a feature tree where the second resource transfer record is located, as well as the feature tree root information of the first block corresponding to the second block where the second resource transfer record is located; and the determining a target block header corresponding to the second resource transfer record from the first block headers in the first blockchain includes: determining feature tree root information of the feature tree where the second resource transfer record is located based on the feature tree path of the feature tree where the second resource transfer record is located; fusing, according to the preset fusion mode, the feature tree root information of the feature tree where the second resource transfer record is located and the feature tree root information of the first block corresponding to the second block where the second resource transfer record is located to obtain current feature information; comparing the current feature information with the feature tree root feature of each first block header in the first blockchain to obtain a comparison result corresponding to each first block header; and determining the first block header with the corresponding comparison result indicating a match/consistency between the current feature information and the feature tree root feature, as the target block header corresponding to the second resource transfer record.

In an embodiment, the preset fusion mode may specifically involve concatenating the feature tree root information of the first block and the feature tree root information of the corresponding second block to obtain the concatenated feature information, and performing the hash operation on the concatenated feature information to obtain the feature tree root feature.

In a specific embodiment, a resource processing method is provided. In this embodiment, the first blockchain and the second blockchain generate blocks using the joint generation mechanism, which specifically includes the following operations:

The node on the first blockchain performs proof of work on a packaged resource transfer record to obtain a proof-of-work result, generates a first block for the packaged resource transfer record based on the proof-of-work result, and transmits the proof-of-work result and feature tree root information of the first block to the node on the second blockchain; and the node on the second blockchain generates a second block using the received proof-of-work result, concatenates the feature tree root information of the first block with feature tree root information of a current block, and performs the hash operation on concatenated feature information obtained through concatenation to generate a feature tree root feature, stores the feature tree root feature in a block header of the second block to obtain an updated second block, and uploads the updated second block to the second blockchain. The node on the second blockchain also returns the feature tree root information of the generated second block to the node on the first blockchain; the node on the first blockchain can concatenate the received feature tree root information with feature tree root information of a currently generated first block, perform the hash operation on concatenated feature information obtained through concatenation to generate a feature tree root feature, and store the generated feature tree root feature in a block header of the currently generated first block to obtain an updated first block; and then the node on the first blockchain can upload the updated first block to the first blockchain. Therefore, in this embodiment, the first block and the second block which are jointly generated save the same feature tree root feature.

In this embodiment, the cross-chain resource transfer specifically includes an operation of cross-chain resource transfer from the first blockchain to the second blockchain, and an operation of cross-chain resource transfer from the second blockchain to the first blockchain. Specific operations are as follows:

1. An operation of cross-chain resource transfer from the first blockchain to the second blockchain

   1.1: The node on the first blockchain transfers a first resource to be transferred in the first blockchain into a first preset account for locking, generates a corresponding first resource transfer record, and uploads the first resource transfer record to the first blockchain.

   1.2: The node on the first blockchain transmits a first cross-chain proof to the node on the second blockchain through the node on the first blockchain.

The first cross-chain proof carries the first resource transfer record, a feature tree path of a feature tree where the fist resource transfer record is located, as well as feature tree root information of a second block corresponding to a first block where the first resource transfer record is located.

1.3: The node on the second blockchain determines feature tree root information of the feature tree where the first resource transfer record is located based on the feature tree path of the feature tree where the first resource transfer record is located.

1.4: The node on the second blockchain concatenates the feature tree root information of the feature tree where the first resource transfer record is located with the feature tree root information of the second block corresponding to the first block where the first resource transfer record is located to obtain concatenated feature information, and further performs the hash operation on the concatenated feature information to obtain current feature information.

1.5: The node on the second blockchain compares the current feature information with a feature tree root feature of each second block header in the second blockchain to obtain a comparison result corresponding to each second block header, and determines the second block header with the corresponding comparison result indicating a match/consistency between the current feature information and the feature tree root feature, as a target block header.

1.6: The node on the second blockchain determines, based on a position of the target block header in the second blockchain, block confirmation information of the first block where the first resource transfer record is located in the first blockchain.

1.7: The node on the second blockchain performs verification based on the block confirmation information to obtain a first verification result.

The first verification result indicating a pass of the verification is obtained when the number of confirmation blocks represented by the block confirmation information is equal to or greater than a preset quantity threshold; and the first verification result indicating a failure of the verification is obtained when the number of confirmation blocks represented by the block confirmation information is less than the preset quantity threshold.

1.8: When the first verification result indicates a pass of the verification, the node on the second blockchain unlocks and transfers out a second resource that matches with the first resource from a second preset account in the second blockchain corresponding to the first preset account.

2. An operation of cross-chain resource transfer from the second blockchain to the first blockchain

2.1: The node on the second blockchain acquires a remaining resource corresponding to the second resource which is transferred out, transfers the remaining resource into the second preset account for locking, generates a corresponding second resource transfer record, and uploads the second resource transfer record to the second blockchain using a proof-of-work result transmitted by the node on the first block chain.

2.2: The node on the second blockchain transmits a second cross-chain proof to the node on the first blockchain.

The second cross-chain proof carries the second resource transfer record, a feature tree path of a feature tree where the second resource transfer record is located, as well as feature tree root information of a first block corresponding to a second block where the second resource transfer record is located.

2.3: The node on the first blockchain determines feature tree root information of the feature tree where the second resource transfer record is located based on the feature tree path of the feature tree where the second resource transfer record is located.

2.4: The node on the first blockchain concatenates the feature tree root information of the feature tree where the second resource transfer record is located with the feature tree root information of the first block corresponding to the second block where the second resource transfer record is located to obtain concatenated feature information, and performs the hash operation on the concatenated feature information to obtain current feature information.

2.5: The node on the first blockchain compares the current feature information with a feature tree root feature of each first block header in the first blockchain to obtain a comparison result corresponding to each first block header, and determines the first block header with the corresponding comparison result indicating a match/consistency between the current feature information and the feature tree root feature, as a target block header corresponding to the second resource transfer record.

2.6: The node on the first blockchain determines, based on a position of the target block header in the first blockchain, block confirmation information of the second block where the second resource transfer record is located in the second blockchain.

2.7: The node on the first blockchain performs verification based on the block confirmation information to obtain a second verification result.

2.8: When the second verification result indicates a pass of the verification, the node on the first blockchain unlocks and transfers out a second resource equivalent to the first resource from the second preset account in the second blockchain corresponding to the first preset account.

The present disclosure further provides an application scenario. In the application scenario, a resource transfer record is transaction data, a first blockchain serves as a mainchain, and a second blockchain serves as a sidechain.

In current sidechain construction technologies, a two-way pegging mechanism is generally employed to achieve the cross-chain asset transfer. Assets are locked in transactions on the mainchain, and then a transaction equivalent to the locked assets is generated on the sidechain, thereby transferring the assets from the mainchain to the sidechain. The cross-chain resource transfer in the related art has the following defects: (1) Large cross-chain proof size. The size of sidechain proofs constructed by some current sidechain construction technologies increases with the length of a current blockchain. A longer blockchain results in a larger size, impacting cross-chain performance. (2) Centralized sidechain structure. A sidechain structure constructed by some existing sidechain construction technologies has a high degree of centralization, and is susceptible to attacks and failures, and a centralized structure contradicts a decentralized concept of blockchains. For the problems of the large cross-chain proof size and the centralized sidechain structure in the existing sidechain construction technologies, an embodiment of the present disclosure provides a blockchain sidechain construction technology based on a common Merkle root, thereby constructing a decentralized proof-of-work sidechain. The size of a constructed sidechain proof is small, and cannot increase with the growth of the blockchain length.

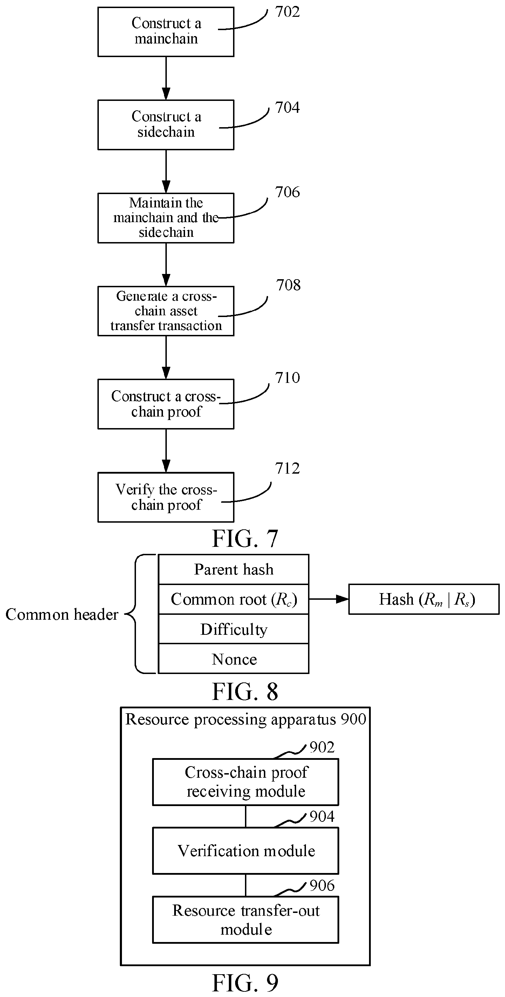

As illustrated in FIG. 7, a schematic diagram of an overall flow of an embodiment, with a first half including operations 702 to 706 and a second half including operations 708 to 712. The first half is a flow involves constructing a mainchain and a sidechain, and maintaining the mainchain and the sidechain to ensure the normal operation of the entire system, which is a necessary operation; and the second half is a flow for a cross-chain asset transfer. When a blockchain user needs to perform the cross-chain asset transfer, the flow will be proceeded. In an embodiment, the following operations are included.

Operation 702: Construct a mainchain. The mainchain is constructed and launched. Similar to a launch process of a typical blockchain, a genesis block is first configured, then, a plurality of nodes start to generate blocks based on consensus from the same genesis block, and the number of nodes is constantly increased.

Operation 704: Construct a sidechain. The process is basically consistent to constructing the mainchain, with the difference being that the process of constructing the sidechain is typically performed after the construction of the mainchain, and the sidechain identifies itself as such to distinguish from the mainchain.

Operation 706: Maintain the mainchain and the sidechain. After the mainchain and the sidechain are launched, block generation nodes continuously reach consensus to generate new blocks and maintain the operation of the entire system, where the mainchain and the sidechain use a common header, providing a foundation for the cross-chain asset transfer in the second half.

In this embodiment, when the block generation nodes generate the blocks, by using the joint generation mechanism, namely using the same proof-of-work result, the blocks are generated on both the mainchain and the sidechain while transactions in the blocks on the mainchain and the sidechain are organized into a common Merkle root Rc. Through the mode, the transactions in the blocks of the mainchain and the sidechain, though different, may share the Merkle root in the block header. Since the mainchain and the sidechain share the Merkle root, verifiers on the mainchain and the sidechain may verify a cross-chain proof using a light node verification mode. As illustrated in FIG. 5, illustrating a schematic diagram of generating a common Merkle root according to an embodiment, referring to FIG. 5, $Rc = Hash(Rm \mid Rs)$, where Rc represents the common Merkle root; Hash() is a hash function, and a length of an output result is consistent with a root length of an original transaction tree; Rm and Rs represent roots of transaction trees of the mainchain and the sidechain respectively; and "|" is a concatenation operator, representing the concatenation of two inputs. For example, ab | cd refers to the concatenation of "ab" and "cd", resulting in "abcd".

As illustrated in FIG. 8, a schematic diagram of a structure of a block header shared by a mainchain and a sidechain according to a specific embodiment. A common header saves a parent hash, a common root (Rc), a difficulty, and a nonce.

Parent hash: a hash value of a parent block is configured for identifying a parent block of the current block.

Common root: the root of the Merkle tree shared by the mainchain and the sidechain is configured for rapid transaction verification, and is generated by hashing concatenated roots of their transaction trees.

Difficulty: a difficulty required for generating the current block, represents a degree of difficulty required to be satisfied by a hash value of the current block in finding a nonce value.

Nonce: a nonce that may satisfy the difficulty requirement in the proof of work, i.e., the proof-of-work result mentioned above.

Operation 708: Generate a cross-chain asset transfer transaction. When the blockchain user needs to perform a cross-chain asset transfer (taking an example of a cross-chain asset transfer from the mainchain to the sidechain), two transactions will be generated: a locking transaction on the mainchain and an unlocking transaction on the sidechain.

Operation 710: Construct a cross-chain proof. To prove to the sidechain that assets of the blockchain user on the mainchain have been locked, i.e., to confirm the locking transaction, the cross-chain proof needs to be constructed.

A cross-chain asset transfer from the mainchain to the sidechain by a user U is composed of two transactions and a transaction confirmation S, which are respectively a locking transaction TX_lock on the mainchain, an unlocking transaction TX_unlock on the sidechain, and a proof for the S that TX_lock has been confirmed by a plurality of blocks on the mainchain (assuming that TX_lock is packaged in a block B, the block B is confirmed by the plurality of blocks on the mainchain). The proof for the S is to ensure that the assets of the U have been locked on the mainchain. Firstly, the transaction TX_lock locks the assets of the user U on the mainchain into a cross-chain address (i.e., the first preset account) on the mainchain, and then generates a cross-chain proof X related to the transaction TX_lock, and transmits the cross-chain proof X to the sidechain.

To prove the validity of the cross-chain asset transfer (i.e., the validity of the transaction TX_lock) to the verifier on the sidechain, the cross-chain proof X needs to demonstrate the validity of the S. When the block B containing the locking transaction TX_lock on the mainchain is confirmed by K blocks (i.e., K blocks following the block B) and K is equal to or greater than the preset quantity threshold, the cross-chain proof X may prove the validity of the S. In this case, the X is generated by the mainchain, and includes two parts:

a Merkle tree path of the locking transaction: the Merkle tree path P_tx of the locking transaction TX_lock is generated by a transaction tree of the block B, which may prove that the locking transaction TX_lock is within the transaction Merkle root Rm. Taking FIG. 5 as an example, assuming that Tx_m1 is the locking transaction TX_lock, P_tx = <Hx_m2, Hx_m3 -4>. A complete Merkle path connecting the transaction Tx_m1 to the Merkle root Rm is <Tx_m1, Hx_m2, Hx_m3-4, Rm>.

Transaction tree root hash value of another chain: the transaction tree root hash value of the another chain is Ro, for example, for the transaction tree root hash value Rm (or Rs) for the mainchain (or the sidechain), the transaction tree root hash value Ro of the corresponding another chain is Rs or (Rm), and through the "|" concatenation operator and the Hash function mentioned above, the common Merkle root Rc may be obtained, which is configured for proving that the transaction tree of the mainchain is valid, i.e., the Rc is generated with the Rm as a parameter.

As mentioned above, the cross-chain proof X includes the two parts: the transaction Merkle tree path P_tx and the transaction tree root hash value Ro of the another chain. Assuming that the hash value in the generated common Merkle root Rc is composed of m bits, and a block contains c transactions, size(Ro)= m; and size(P_tx) = log2(c)*m, and the final size of the cross-chain proof is size(X) = size(Ro) + size(P_tx) = log2(c)*m + m. The cross-chain proof X does not include block information prior to the block B where the locking transaction TX_lock is located, such that the cross-chain proof X is unrelated to the length of the blockchain, and the size needs to be smaller than that of a sidechain with a sidechain proof increasing with the length of the blockchain. The longer the blockchain, the more significant the advantage becomes.

Operation 712: Verify the cross-chain proof. After the cross-chain proof is constructed, the sidechain needs to verify correctness of the cross-chain proof using the light node verification mode.

A node on the sidechain parses a Merkle tree path of the locking transaction from the cross-chain proof, calculates a Merkle root of a block where the locking transaction is located, then concatenates the Merkle root with a transaction tree root hash value of another chain parsed from the cross-chain proof, applies the hash function to a concatenated value to obtain a common Merkle root, then compares the common Merkle root with a Merkle root in a block header of each block on the sidechain to position a target block header, and obtains the number of confirmation blocks of the locking transaction according to a position of the target block header. If the locking transaction is confirmed by a sufficient number of blocks, the verification passes. The node on the sidechain generates an unlocking transaction TX_unlock based on the locking transaction in the cross-chain proof, and then the TX_unlock unlocks equivalent assets from a cross-chain address on the sidechain (i.e., the second preset account) to the user U, thereby completing the asset transfer process.

The cross-chain asset transfer process from the sidechain to the mainchain by the user U is similar to the above, with only the roles of the mainchain and sidechain swapped.

Compared with the existing sidechain construction technologies, the present disclosure has the following advantages.

Decentralized sidechain structure: the sidechain construction method and the cross-chain proof construction method based on the common Merkle root designed in the present disclosure do not require a centralized structure to support, which makes the sidechain structure decentralized, secure, and not prone to manipulation, aligning with the decentralized concept of the blockchain.

Small cross-chain proof size: based on the sidechain construction method based on the common Merkle root in the present disclosure, the cross-chain proof constructed using the cross-chain proof construction method in the present disclosure is small in size and does not increase with the length of the blockchain, resulting in high efficiency in generation and verification, and therefore the cross-chain performance is high.

The operations in the flowcharts involved in the above embodiments are displayed in sequence based on indication of arrows, but the operations are not necessarily performed sequentially according to a sequence indicated by the arrows. Unless otherwise explicitly specified in the present disclosure, execution of the operations is not strictly limited, and the operations may be performed in other sequences. In addition, at least some operations in the flowcharts involved in the above embodiments may include a plurality of operations or a plurality of stages, and these operations or stages are not necessarily performed at the same moment, and may be performed at different moments. These operations or stages are not necessarily performed in sequence, and may be performed in turns or alternately with other operations, or at least a part of operations or stages in the other operations.

In an embodiment, the present disclosure further provides a blockchain system. The blockchain system includes a first blockchain and a second blockchain. A plurality of first blocks exist in the first blockchain, and a plurality of second blocks which are in one-to-one correspondence with the plurality of first blocks exist in the second blockchain, where each second block and the first block corresponding to the second block are generated through the same proof-of-work result, and a second block header of each second block stores a feature tree root feature generated based on feature tree root information of the corresponding first block.

In an embodiment, in the blockchain system, the second block header of each second block and a first block header of the corresponding first block store the same feature tree root feature. Each feature tree root feature is obtained by fusing feature tree root information of the corresponding second block and the feature tree root information of the corresponding first block according to a preset fusion mode.

In an embodiment, in the blockchain system, each feature tree root feature is obtained by concatenating the feature tree root information of the corresponding second block with the feature tree root information of the corresponding first block and performing a hash operation on concatenated feature information obtained through concatenation.

For a detailed explanation of the embodiments of the blockchain system, reference may be made to the above embodiments, which will not be repeated herein.

In the blockchain system, the first blockchain and the second blockchain may include completely different nodes, or share nodes.

In the above blockchain system, since the block in the first blockchain and the block in the second blockchain are generated through the same proof-of-work result, and the second block header of the second block stores the feature tree root feature generated based on the feature tree root information of the corresponding first block, excellent cross-chain performance is achieved during a cross-chain operation.

Based on the same inventive concept, an embodiment of the present disclosure further provides a resource processing apparatus for implementing the foregoing resource processing method. Implementation solutions provided by the apparatus for solving the problems are similar to the implementation solutions recorded in the foregoing method. Therefore, for specific limitations in one or more resource processing apparatus embodiments provided below, reference may be made to the limitations on the resource processing method in the foregoing descriptions, which will not be repeated herein.

In an embodiment, as illustrated in FIG. 9, a resource processing apparatus 900 is provided, and includes:

a cross-chain proof receiving module 902, configured to receive a first cross-chain proof transmitted by a node on a first blockchain, the first cross-chain proof carrying a first resource transfer record that has been uploaded to the first blockchain, the first resource transfer record stating that a first resource is transferred into a first preset account in the first blockchain and is locked, a plurality of first blocks existing in the first blockchain, a plurality of second blocks which are in one-to-one correspondence with the plurality of first blocks existing in the second blockchain, each second block and the first block corresponding to the second block being generated through the same proof-of-work result, and a second block header of each second block storing a feature tree root feature generated based on feature tree root information of the corresponding first block;

a verification module 904, configured to verify validity of the first resource transfer record based on the feature tree root feature of each second block header in the second blockchain to obtain a first verification result; and

a resource transfer-out module 906, configured to unlock and transfer out a second resource that matches with the first resource from a second preset account in the second blockchain corresponding to the first preset account when the first verification result indicates a pass of the verification (that is, the first verification result indicates that the first resource transfer record is valid).

According to the above resource processing apparatus, the first cross-chain proof transmitted from the node on the first blockchain to the node on the second blockchain is received, the first cross-chain proof carries the first resource transfer record that has been uploaded to the first blockchain, and the first resource transfer record is configured for representing that the first resource is transferred into the first preset account in the first blockchain and is locked. Since each first block in the first blockchain has the corresponding second block in the second blockchain, that is generated through the same proof-of-work result, and the second block header of each second block incorporates the feature tree root information of the corresponding first block, the node on the second blockchain may verify, based on the second block headers in the second blockchain, the resource transfer record carried in the cross-chain proof. When the verification result indicates a pass of the verification, the second resource equivalent to the first resource is unlocked and transferred out of the second preset account in the second blockchain corresponding to the first preset account, thereby achieving a cross-chain resource transfer. The block headers in the second blockchain may be configured for verification in the validity verification process without acquiring the block headers in the first blockchain from the node on the first blockchain, thereby saving performance overhead caused by acquiring the block headers in the first blockchain, achieving high verification efficiency, and then improving cross-chain performance.

In an embodiment, the verification module 904 is further configured to determine a target block header from the second block headers in the second blockchain, where a feature tree root feature stored in the target block header is generated based on the feature tree root information of the first block where the first resource transfer record is located; determine, based on a position of the target block header in the second blockchain, block confirmation information of the first block where the first resource transfer record is located in the first blockchain; and obtain the first verification result indicating a pass of the verification when the number of confirmation blocks represented by the block confirmation information is equal to or greater than a preset quantity threshold.

In an embodiment, the verification module 904 is further configured to obtain the first verification result indicating a failure of the verification (that is, the first verification result indicates that the first resource transfer record is invalid) when the number of confirmation blocks represented by the block confirmation information is less than the preset quantity threshold.

In an embodiment, the feature tree root feature stored in the second block header of the second block is obtained by fusing feature tree root information of the second block and the feature tree root information of the corresponding first block according to a preset fusion mode; and the first cross-chain proof further carries a feature tree path of a feature tree where the fist resource transfer record is located, as well as feature tree root information of a second block corresponding to the first block where the first resource transfer record is located. The verification module 904 is further configured to determine feature tree root information of the feature tree where the first resource transfer record is located based on the feature tree path of the feature tree where the first resource transfer record is located; fuse, according to the preset fusion mode, the feature tree root information of the feature tree where the first resource transfer record is located and the feature tree root information of the second block corresponding to the first block where the first resource transfer record is located to obtain current feature information; and compare the current feature information with the feature tree root feature stored in each second block header to obtain a comparison result corresponding to each second block header, and determine the second block header with the corresponding comparison result indicating a match/consistency between the current feature information and the feature tree root feature, as a target block header.

In an embodiment, the verification module 904 is further configured to concatenate the feature tree root information of the feature tree where the first resource transfer record is located with the feature tree root information of the second block corresponding to the first block where the first resource transfer record is located to obtain concatenated feature information; and perform a hash operation on the concatenated feature information to obtain current feature information.

In an embodiment, the first blockchain is a mainchain, and the second blockchain is a sidechain corresponding to the first blockchain. The above resource processing apparatus further includes a block generation module, configured to receive the proof-of-work result transmitted by the node on the first blockchain, as well as first feature tree root information of the first block generated according to the proof-of-work result when the node on the first blockchain obtains the proof-of-work result; use the proof-of-work result to generate a second block, generate a feature tree root feature according to the first feature tree root information, and store the feature tree root feature in a block header of the second block to obtain an updated second block; and upload the updated second block to the second blockchain.

In an embodiment, the block generation module is further configured to return second feature tree root information of the generated second block to the node on the first blockchain to instruct the node on the first blockchain to generate a feature tree root feature according to the second feature tree root information, store the feature tree root feature to obtain an updated first block, and upload the updated first block to the first blockchain.

In an embodiment, the above resource processing apparatus further includes: a cross-chain transfer module, configured to acquire a remaining resource corresponding to the second resource which is transferred out, transfer the remaining resource into the second preset account for locking, generate a corresponding second resource transfer record, and upload the second resource transfer record to the second blockchain using the proof-of-work result transmitted by the node on the first blockchain; and transmit a second cross-chain proof carrying the second resource transfer record to the node on the first blockchain, where the second cross-chain proof is configured for instructing the node on the first blockchain to verify validity of the second resource transfer record based on the feature tree root feature of each first block header in the first blockchain to obtain a second verification result, and unlock and transfer out a resource that matches with the remaining resource from the first preset account in the first blockchain when the second verification result indicates a pass of the verification (that is, the second verification result indicates that the second resource transfer record is valid).

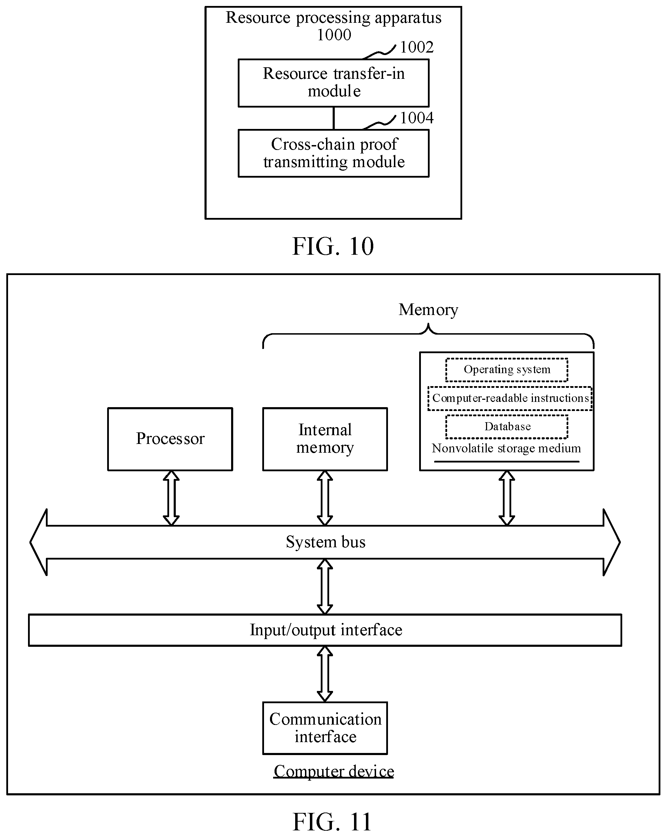

In an embodiment, as illustrated in FIG. 10, a resource processing apparatus 1000 is provided, and includes:

a resource transfer-in module 1002, configured to transfer a first resource to be transferred in a first blockchain into a first preset account for locking, generate a corresponding first resource transfer record, and upload the first resource transfer record to the first blockchain; and

a cross-chain proof transmitting module 1004, configured to transmit a first cross-chain proof to a node on a second blockchain through the node on the first blockchain,

each first block in the first blockchain having a corresponding second block in the second blockchain, that is generated through the same proof-of-work result, and a second block header of each second block incorporating feature tree root information of the corresponding first block; and the first cross-chain proof carrying the first resource transfer record, and being configured for to instructing the node on the second blockchain to verify the resource transfer record based on each second block header in the second blockchain to obtain a first verification result, and unlock and transfer out a second resource equivalent to the first resource from a second preset account in the second blockchain corresponding to the first preset account when the first verification result indicates a pass of the verification.

According to the above resource processing apparatus, since each first block in the first blockchain has a corresponding second block in the second blockchain, that is generated through the same proof-of-work result, and the second block header of each second block incorporates the feature tree root information of the corresponding first block, and the node on the second blockchain may verify the resource transfer record carried in the cross-chain proof based on the second block headers in the second blockchain, such that when the node on the first blockchain transmits the cross-chain proof, there is no need to transmit block header information of the first blockchain to the node on the second blockchain, thereby saving performance overhead when transmitting the cross-chain proof, and improving the cross-chain performance.

In an embodiment, a first block header of each first block in the first blockchain stores the feature tree root feature generated based on the feature tree root information of the corresponding second block. The above resource processing method further includes: receiving a second cross-chain proof transmitted by the node on the second blockchain, where the second cross-chain proof carries a second resource transfer record that has been uploaded to the first blockchain and states/documents that a remaining resource corresponding to the second resource is transferred into the second preset account and is locked; verifying validity of the second resource transfer record based on the feature tree root feature of each first block header in the first blockchain to obtain a second verification result; and unlocking and transferring out a resource that matches with the first resource from the second preset account in the second blockchain corresponding to the first preset account when the second verification result indicates a pass of the verification.

In an embodiment, the resource transfer-out module is further configured to determine a target block header corresponding to the second resource transfer record from the first block headers in the first blockchain, where a feature tree root feature stored in the target block header corresponding to the second resource transfer record is generated based on feature tree root information of a second block where the second resource transfer record is located; determine, based on a position of the target block header corresponding to the second resource transfer record in the first blockchain, block confirmation information of the second block where the second resource transfer record is located in the second blockchain; and obtain a second verification result indicating a pass of the verification when the number of confirmation blocks represented by the block confirmation information is equal to or greater than a preset quantity threshold.

In an embodiment, the feature tree root feature stored in the first block header of the first block is obtained by fusing the feature tree root information of the first block and the feature tree root information of the corresponding second block according to a preset fusion mode; the second cross-chain proof further carries a feature tree path of a feature tree where the second resource transfer record is located, as well as the feature tree root information of the first block corresponding to the second block where the second resource transfer record is located; and the resource transfer-out module is further configured to determine feature tree root information of the feature tree where the second resource transfer record is located based on the feature tree path of the feature tree where the second resource transfer record is located; fuse, according to the preset fusion mode, the feature tree root information of the feature tree where the second resource transfer record is located and the feature tree root information of the first block corresponding to the second block where the second resource transfer record is located to obtain current feature information; compare the current feature information with the feature tree root feature of each first block header in the first blockchain to obtain a comparison result corresponding to each first block header; and determine the first block header with the corresponding comparison result indicating a match/consistency between the current feature information and the feature tree root feature, as a target block header corresponding to the second resource transfer record.

All or some of the modules in the above resource processing apparatus may be implemented by software, hardware, or a combination thereof. The above modules may be built in or independent of a processor of a computer device in a form of hardware, or may be stored in a memory of the computer device in a form of software, for the processor to invoke to execute operations corresponding to the foregoing modules.

In an embodiment, a computer device is provided and may be a server. A diagram of an internal structure of the computer device may be illustrated in FIG. 11. The computer device includes a processor, a memory, an input/output (I/O) interface, and a communication interface. The processor, the memory, and the input/output interface are connected through a system bus, and the communication interface is connected to the system bus through the input/output interface. The processor of the computer device is configured to provide computation and control capabilities. The memory of the computer device includes a non-volatile storage medium and an inner memory. The non-volatile storage medium has an operating system, computer-readable instructions, and a database stored therein. The internal memory provides an operating environment for the operating system and the computer-readable instructions in the non-volatile storage medium. The database of the computer device is configured to store blockchain data. The input/output interface of the computer device is configured to exchange information between the processor and external devices. The communication interface of the computer device is configured to connect and communicate with an external terminal through a network. The computer-readable instructions, when executed by the processor, implement the resource processing method according to the embodiments of the present disclosure.

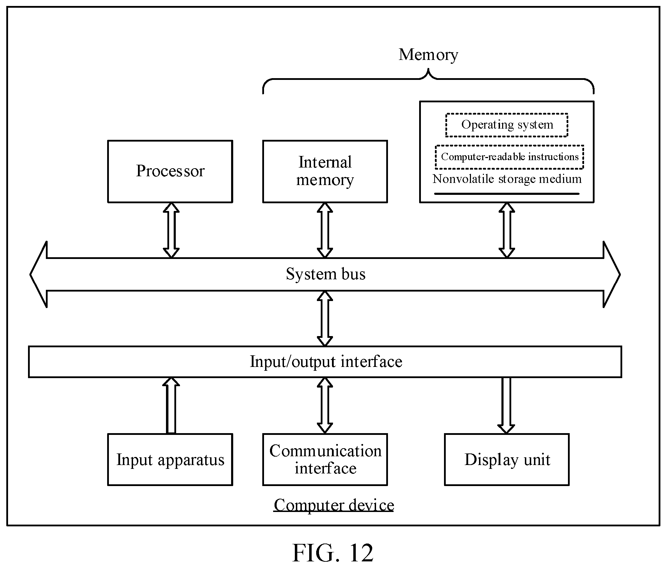

In an embodiment, a computer device is provided. The computer device may be a terminal, and a diagram of an internal structure of the computer device may be illustrated in FIG. 12. The computer device includes a processor, a memory, an input/output interface, a communication interface, a display unit, and an input apparatus. The processor, the memory, and the input/output interface are connected through a system bus, and the communication interface, the display unit, and the input apparatus are connected to the system bus through the input/output interface. The processor of the computer device is configured to provide computation and control capabilities. The memory of the computer device includes a non-volatile storage medium and an internal memory. The non-volatile storage medium has an operating system and computer-readable instructions stored therein. The internal memory provides an operating environment for the operating system and the computer-readable instructions in the non-volatile storage medium. The input/output interface of the computer device is configured to exchange information between the processor and external devices. The communication interface of the computer device is configured to communicate with an external terminal in a wired or wireless mode. The wireless mode may be implemented through WIFI, a mobile cellular network, near field communication (NFC), or another technology. The computer-readable instructions, when executed by the processor, implement the resource processing method according to the embodiments of the present disclosure. The display unit of the computer device is configured to form a visible picture, and may be a display screen, a projection apparatus, or a virtual reality imaging apparatus. The display screen may be a liquid crystal display screen or an e-ink display screen. The input apparatus of the computer device may be a touch layer covering the display screen, or may be a button, a trackball, or a touchpad disposed on a housing of the computer device, or may be an external keyboard, touchpad, mouse, or the like.

A person skilled in the art may understand that in the structures illustrated in FIG. 11 and FIG. 12, only block diagrams of a partial structure related to a solution in the present disclosure are illustrated, which do not constitute a limitation to the computer device to which the solution in the present disclosure is applied. Specifically, the computer device may include more or fewer components than those illustrated in the figures, or some components may be combined, or a different component deployment may be used.

In an embodiment, a computer device is provided, including a memory and a processor. The memory has computer-readable instructions stored therein. When the processor executes the computer-readable instructions, the operations in the resource processing method according to the above embodiments are implemented.

In an embodiment, a computer-readable storage medium is provided, having computer-readable instructions stored therein. The computer-readable instructions, when executed by a processor, implement the operations in the resource processing method according to the above embodiments.

In an embodiment, a computer program product is provided, including computer-readable instructions. The computer-readable instructions, when executed by a processor, implement the operations in the resource processing method according to the above embodiments.

User information (including but not limited to user equipment information and user personal information) and data (including but not limited to data for analysis, stored data, and displayed data) involved in the present disclosure are all information and data authorized by users or fully authorized by all parties, and collection, use, and processing of relevant data need to comply with relevant laws, regulations, and standards of relevant countries and regions.

A person of ordinary skill in the art may understand that all or some of the procedures of the methods of the above embodiments may be implemented by computer-readable instructions instructing relevant hardware. The computer-readable instructions may be stored in a non-volatile computer-readable storage medium. When the computer-readable instructions are executed, the procedures of the embodiments of the foregoing methods may be included. Any reference to a memory, a database, or another medium used in the embodiments provided in the present disclosure may include at least one of non-volatile and volatile memories. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), and a graphene memory. The volatile memory may include a random access memory (RAM) or an external cache memory. As an illustration rather than a limitation, the RAM is available in various forms, such as a static random access memory (SRAM) or a dynamic random access memory (DRAM). The database involved in the embodiments provided in the present disclosure may include at least one of a relational database or a non-relational database. The non-relational database may include a blockchain-based distributed database, or the like, which is not limited herein. The processor involved in the embodiments provided in the present disclosure may be a general-purpose processor, a central processing unit, a graphics processing unit, a digital signal processor, a programmable logic device, a quantum computing-based data processing logic device, or the like, which is not limited herein.

The technical features in the above embodiments may be combined in different manners to form other embodiments. For the brevity of the description, not all possible combinations of the technical features in the above embodiments are described. However, provided that combinations of the technical features do not conflict with each other, the combinations of the technical features are considered as falling within the scope described in this specification.

The above embodiments merely express several implementations of the present disclosure. The descriptions thereof are relatively specific and detailed, but are not to be understood as limitations to the scope of the present disclosure. For a person of ordinary skill in the art, several transformations and improvements may also be made without departing from the idea of the present disclosure. These transformations and improvements belong to the protection scope of the present disclosure. Therefore, the protection scope of the patent of the present disclosure shall be subject to the appended claims.

**Claims**

1. A resource processing method, executed by a node on a second blockchain including a plurality of second blocks, comprising:

   receiving a first cross-chain proof transmitted by a node on a first blockchain, wherein the first cross-chain proof carries a first resource transfer record that has been uploaded to the first blockchain, the first resource transfer record documenting that a first resource has been transferred into and locked in a first preset account in the first blockchain, a plurality of first blocks existing in the first blockchain and being in one-to-one correspondence with the plurality of second blocks, each of the plurality of second blocks and the first block corresponding to the second block being generated using a same proof-of-work result, and a second block header of each of the plurality of second blocks storing feature tree root information generated using feature tree root information of the first block corresponding to the second block;
   verifying validity of the first resource transfer record using the feature tree root information of each second block header in the second blockchain to obtain a first verification result; and
   in response to the first verification result indicating that the first resource transfer record is valid, unlocking and transferring out a second resource that matches with the first resource from a second preset account in the second blockchain that corresponds to the first preset account.

2. The method of claim 1, wherein verifying the validity of the first resource transfer record using the feature tree root information of each second block header in the second blockchain to obtain the first verification result comprises:

   determining a target block header from the second block headers in the second blockchain, wherein feature tree root information stored in the target block header is generated using feature tree root information of a first block where the first resource transfer record is located;
   determining, using a position of the target block header in the second blockchain, block confirmation information of the first block where the first resource transfer record is located in the first blockchain; and
   obtaining the first verification result indicating that the first resource transfer record is valid, in response to a number of confirmation blocks represented by the block confirmation information being equal to or greater than a preset quantity threshold.

3. The method of claim 2, wherein verifying the validity of the first resource transfer record using the feature tree root information of each second block header in the second blockchain to obtain the first verification result further comprises:
   obtaining the first verification result indicating that the first resource transfer record is invalid, in response to the number of confirmation blocks represented by the block confirmation information being less than the preset quantity threshold.

4. The method of claim 2, wherein the feature tree root information stored in the second block header of the second block is obtained by fusing feature tree root information of the second block and the feature tree root information of the first block corresponding to the second block according to a preset fusion mode; and the first cross-chain proof further carries a feature tree path of a feature tree where the first resource transfer record is located, and feature tree root information of a second block corresponding to the first block where the first resource transfer record is located; and wherein determining the target block header from the second block headers in the second blockchain comprises:

   determining, using the feature tree path of the feature tree where the first resource transfer record is located, feature tree root information of the feature tree where the first resource transfer record is located;
   fusing, according to the preset fusion mode, the feature tree root information of the feature tree where the first resource transfer record is located and the feature tree root information of the second block corresponding to the first block where the first resource transfer record is located to obtain current feature information;
   comparing the current feature information with the feature tree root information stored in each second block header to obtain a respective comparison result corresponding to each second block header; and
   determining the second block header whose corresponding comparison result indicating a consistency between the current feature information and the feature tree root information, as a target block header.

5. The method of claim 4, wherein fusing, according to the preset fusion mode, the feature tree root information of the feature tree where the first resource transfer record is located and the feature tree root information of the second block corresponding to the first block where the first resource transfer record is located to obtain the current feature information comprises:

concatenating the feature tree root information of the feature tree where the first resource transfer record is located and the feature tree root information of the second block corresponding to the first block where the first resource transfer record is located to obtain concatenated feature information; and
performing a hash operation on the concatenated feature information to obtain current feature information.

6. The method of any one of claims 1 to 5, wherein the first blockchain is a mainchain, and the second blockchain is a sidechain corresponding to the first blockchain; and the method further comprises:

when the node on the first blockchain obtains a proof-of-work result, receiving the proof-of-work result transmitted by the node on the first blockchain, and first feature tree root information of a first block generated using the proof-of-work result;
generating a second block using the proof-of-work result;
generating feature tree root information using the first feature tree root information, and storing the feature tree root information in a block header of the second block to obtain an updated second block; and
uploading the updated second block to the second blockchain.

7. The method of claim 6, further comprising:
returning second feature tree root information of the second block as regenerated to the node on the first blockchain, to instruct the node on the first blockchain to generate feature tree root information using the second feature tree root information, store the feature tree root information to obtain an updated first block, and upload the updated first block to the first blockchain.

8. The method of any one of claims 1 to 7, wherein a first block header of each of the plurality of first blocks stores feature tree root information generated using feature tree root information of the corresponding second block; and the method further comprises:

acquiring a remaining resource corresponding to the second resource which is transferred out, transferring the remaining resource into the second preset account for locking, to generate a corresponding second resource transfer record;
uploading the second resource transfer record to the second blockchain using a proof-of-work result transmitted by the node on the first blockchain; and
transmitting a second cross-chain proof carrying the second resource transfer record to the node on the first blockchain,
wherein the second cross-chain proof is for instructing the node on the first blockchain to verify validity of the second resource transfer record using feature tree root information of each first block header in the first blockchain to obtain a second verification result, and in response to the second verification result indicating that the second resource transfer record is valid, unlock and transfer out a resource that matches with the remaining resource, from the first preset account in the first blockchain.

9. A resource processing method, executed by a node on a first blockchain including a plurality of first blocks, comprising:

transferring a to-be-transferred first resource in the first blockchain into a first preset account for locking, generating a corresponding first resource transfer record, and uploading the first resource transfer record to the first blockchain, each of the plurality of second blocks and the first block corresponding to the second block being generated using a same proof-of-work result; and
transmitting a first cross-chain proof carrying the first resource transfer record to a node on a second blockchain, wherein the second blockchain includes a plurality of second blocks which are in one-to-one correspondence with the plurality of first blocks, and a second block header of each of the plurality of second blocks stores feature tree root information generated using feature tree root information of the first block corresponding to the second block;
wherein the first cross-chain proof is for instructing the node on the second blockchain to verify validity of the first resource transfer record using the feature tree root information of each second block header in the second blockchain to obtain a first verification result, and in response to the first verification result indicating that the first resource transfer record is valid, unlock and transfer out a second resource that matches with the first resource from a second preset account in the second blockchain that corresponds to the first preset account.

10. The method of claim 9, wherein a first block header of each of the plurality of first blocks in the first blockchain stores feature tree root information generated using feature tree root information of the second block corresponding to the first block; and the method further comprises:

receiving a second cross-chain proof transmitted by the node on the second blockchain, wherein the second cross-chain proof carries a second resource transfer record that has been uploaded to the second blockchain and documents that a remaining resource corresponding to the second resource has been transferred into and locked in the second preset account;

verifying validity of the second resource transfer record using the feature tree root information of each first block header in the first blockchain to obtain a second verification result; and

in response to the second verification result indicating that the second resource transfer record is valid, unlocking and transferring out a resource that matches with the first resource from the second preset account in the second blockchain that corresponds to the first preset account.

11. The method of claim 10, wherein verifying validity of the second resource transfer record using the feature tree root information of each first block header in the first blockchain to obtain the second verification result comprises:

determining a target block header corresponding to the second resource transfer record from the first block headers in the first blockchain, wherein feature tree root information stored in the target block header corresponding to the second resource transfer record is generated using feature tree root information of a second block where the second resource transfer record is located;

determining, using a position of the target block header corresponding to the second resource transfer record in the first blockchain, block confirmation information of the second block where the second resource transfer record is located in the second blockchain; and

obtaining the second verification result indicating that the second resource transfer record is valid in response to a number of confirmation blocks represented by the block confirmation information being equal to or greater than a preset quantity threshold.

12. The method of claim 11, wherein the feature tree root information stored in the first block header of the first block is obtained by fusing feature tree root information of the first block and the feature tree root information of the second block corresponding to the first block according to a preset fusion mode, wherein the second cross-chain proof further carries a feature tree path of a feature tree where the second resource transfer record is located, and the feature tree root information of the first block corresponding to the second block where the second resource transfer record is located; and

wherein determining the target block header corresponding to the second resource transfer record from the first block headers in the first blockchain comprises:

determining, using the feature tree path of the feature tree where the second resource transfer record is located, feature tree root information of the feature tree where the second resource transfer record is located;

fusing, according to the preset fusion mode, the feature tree root information of the feature tree where the second resource transfer record is located and the feature tree root information of the first block corresponding to the second block where the second resource transfer record is located to obtain current feature information;

comparing the current feature information with the feature tree root information of each first block header in the first blockchain to obtain a respective comparison result corresponding to each first block header; and

determining the first block header whose corresponding comparison result indicating a consistency between the current feature information and the feature tree root information, as a target block header corresponding to the second resource transfer record.

13. A blockchain system, comprising a first blockchain and a second blockchain, a plurality of first blocks existing in the first blockchain, a plurality of second blocks which are in one-to-one correspondence with the plurality of first blocks existing in the second blockchain, each of the plurality of second blocks and the first block corresponding to the second block being generated using a same proof-of-work result, and a second block header of each of the plurality of second blocks storing feature tree root information generated using feature tree root information of the first block corresponding to the second block.

14. The system of claim 13, wherein the second block header of each of the plurality of second blocks and a first block header of the first block corresponding to the second block store the same feature tree root information, and each feature tree root information is obtained by fusing feature tree root information of the corresponding second block and the feature tree root information of the corresponding first block according to a preset fusion mode.

15. The system of claim 14, wherein each feature tree root information is obtained by concatenating the feature tree root information of the corresponding second block with the feature tree root information of the corresponding first block and performing a hash operation on concatenated feature information obtained through concatenation.

16. A resource processing apparatus, comprising:

a cross-chain proof receiving module, configured to receive a first cross-chain proof transmitted by a node on a first blockchain, wherein the first cross-chain proof carries a first resource transfer record that has been uploaded to the first blockchain, the first resource transfer record documenting that a first resource has been transferred into and locked in a first preset account in the first blockchain, a plurality of first blocks existing in the first blockchain, a plurality of second blocks which are in one-to-one correspondence with the plurality of first blocks existing in the second blockchain, each of the plurality of second blocks and the first block corresponding to the second block being generated using a same proof-of-work result, and a second block header of each of the plurality of second blocks storing feature tree root information generated using feature tree root information of the first block corresponding to the second block;
a verification module, configured to verify validity of the first resource transfer record using the feature tree root information of each second block header in the second blockchain to obtain a first verification result; and
a resource transfer-out module, configured to, in response to the first verification result indicating that the first resource transfer record is valid, unlock and transfer out a second resource that matches with the first resource from a second preset account in the second blockchain that corresponds to the first preset account.

17. A resource processing apparatus, comprising:

a resource transfer-in module, configured to transfer a to-be-transferred first resource in a first blockchain into a first preset account for locking, generate a corresponding first resource transfer record, and upload the first resource transfer record to the first blockchain; and
a cross-chain proof transmitting module, configured to transmit a first cross-chain proof carrying the first resource transfer record to a node on a second blockchain,
wherein a plurality of first blocks exist in the first blockchain, a plurality of second blocks which are in one-to-one correspondence with the plurality of first blocks exist in the second blockchain, each of the plurality of second blocks and the first block corresponding to the second block being generated using a same proof-of-work result, and a second block header of each of the plurality of second blocks storing feature tree root information generated using feature tree root information of the first block corresponding to the second block; and the first cross-chain proof being configured for instructing the node on the second blockchain to verify validity of the first resource transfer record using the feature tree root information of each second block header in the second blockchain to obtain a first verification result, and in response to the first verification result indicating that the first resource transfer record is valid, unlock and transfer out a second resource that matches with the first resource from a second preset account in the second blockchain that corresponds to the first preset account.

18. A computer device, comprising a memory and a processor, the memory having computer-readable instructions stored therein, and the processor, when executing the computer-readable instructions, implementing the method of any one of claims 1 to 8 or 9 to 12.

19. A computer-readable storage medium having stored therein computer-readable instructions that, when executed by a processor, cause the processor to perform the method of any one of claims 1 to 8 or 9 to 12.

20. A computer program product comprising computer-readable instructions that, when executed by a processor, cause the processor to perform the method of any one of claims 1 to 8 or 9 to 12.

FIG. 1A

| Block body | |
| --- | --- |
| Version number | ⎫ |
| Input information feature value | ⎬ Block header |
| Timestamp | |
| Difficulty | ⎭ |

| Block body |
| --- |
| Block header feature value of a parent block |
| Version number |
| Input information feature value |
| Timestamp |
| Difficulty |

| Block body |
| --- |
| Block header feature value of a parent block |
| Version number |
| Input information feature value |
| Timestamp |
| Difficulty |

FIG. 1B

1. Acquire, by a node, whole-network input information

2. Verify the input information, store the input information into an internal memory pool, and update a feature tree

3. Update a timestamp

4. Try different random numbers

5. Calculate a feature value

6. Repeatedly execute 2 to 5 until a reasonable feature value is found

7. Package blocks

8. Broadcast a new block

9. Upload to a blockchain after other nodes perform verification

Generation process of new blocks

FIG. 1C

202    202

202    202

Network connection

204    204

204    204

FIG. 2

Operation 302

Receive a first cross-chain proof transmitted by a node on a first blockchain, the first cross-chain proof carrying a first resource transfer record that has been uploaded to the first blockchain

Operation 304

Verify validity of the first resource transfer record based on the feature tree root of each second block header in the second blockchain to obtain a first verification result

Operation 306

Unlock and transfer out, in response to the first verification result indicating a pass of the verification, a second resource determined according to the first resource, from a second preset account in the second blockchain that corresponds to the first preset account

FIG. 3

402a

First
blockchain ···  → | First block | → | First block | → | First block | →

Proof-of-work
result    Proof-of-work
result    Proof-of-work
result

Second
blockchain ···  → | Second block | → | Second block | → | Second block | →

402b

## FIG. 4

Hash $\left[\ \boxed{R_m}\ \right.$ $\left|\ \boxed{R_s}\ \right]$ $=$ $\boxed{R_c}$

$\boxed{\begin{matrix}H_x\\m1\text{-}2\end{matrix}}$  $\boxed{\begin{matrix}H_x\\m3\text{-}4\end{matrix}}$

$\boxed{\begin{matrix}H_x\\m1\end{matrix}}$ $\boxed{\begin{matrix}H_x\\m2\end{matrix}}$ $\boxed{\begin{matrix}H_x\\m3\end{matrix}}$ $\boxed{\begin{matrix}H_x\\m4\end{matrix}}$

$\boxed{\begin{matrix}T_x\\m1\end{matrix}}$ $\boxed{\begin{matrix}T_x\\m2\end{matrix}}$ $\boxed{\begin{matrix}T_x\\m3\end{matrix}}$ $\boxed{\begin{matrix}T_x\\m4\end{matrix}}$

$\boxed{\begin{matrix}H_x\\m1\text{-}2\end{matrix}}$  $\boxed{\begin{matrix}H_x\\m3\text{-}4\end{matrix}}$

$\boxed{\begin{matrix}H_x\\m1\end{matrix}}$ $\boxed{\begin{matrix}H_x\\m2\end{matrix}}$ $\boxed{\begin{matrix}H_x\\m3\end{matrix}}$ $\boxed{\begin{matrix}H_x\\m4\end{matrix}}$

$\boxed{\begin{matrix}T_x\\m1\end{matrix}}$ $\boxed{\begin{matrix}T_x\\m2\end{matrix}}$ $\boxed{\begin{matrix}T_x\\m3\end{matrix}}$ $\boxed{\begin{matrix}T_x\\m4\end{matrix}}$

## FIG. 5

Operation 602

Transfer a to-be-transferred first resource in a first blockchain into a first preset account for locking, generate a corresponding first resource transfer record, and upload the first resource transfer record to the first blockchain

Operation 604

Transmit a first cross-chain proof carrying the first resource transfer record to a node on a second blockchain

## FIG. 6

Construct a
mainchain — 702

Construct a
sidechain — 704

Maintain the
mainchain and the
sidechain — 706

Generate a cross-
chain asset
transfer transaction — 708

Construct a cross-
chain proof — 710

Verify the cross-
chain proof — 712

**FIG. 7**

Common header
{
Parent hash

Common root ($R_c$) → Hash ($R_m \mid R_s$)

Difficulty

Nonce
}

**FIG. 8**

Resource processing apparatus 900

Cross-chain proof
receiving module — 902

Verification module — 904

Resource transfer-out
module — 906

**FIG. 9**

Resource processing apparatus
1000
1002

Resource transfer-in
module

1004

Cross-chain proof
transmitting module

FIG. 10

Memory

Operating system

Computer-readable instructions

Database
Nonvolatile storage medium

Processor

Internal
memory

System bus

Input/output interface

Communication
interface

Computer device

FIG. 11

Memory

Processor

Internal
memory

Operating system

Computer-readable instructions

Nonvolatile storage medium

System bus

Input/output interface

Input apparatus

Communication
interface

Display unit

Computer device

FIG. 12

## INTERNATIONAL SEARCH REPORT

| | International application No. |
|---|---|
| | **PCT/CN2023/124962** |

**A. CLASSIFICATION OF SUBJECT MATTER**

G06Q20/40(2012.01)i

According to International Patent Classification (IPC) or to both national classification and IPC

**B. FIELDS SEARCHED**

Minimum documentation searched (classification system followed by classification symbols)

IPC: G06Q20/-、H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 跨链, 转移, 第一区块, 第二区块, 工作量证明, 特征树, 根特征, 默克尔树, 梅克尔树, 有效性, 验证, 校验, cross-chain, transfer, first block, second block, proof of work, POW, feature tree, root feature, merkle tree, validity, verify, validate, authenticate

**C. DOCUMENTS CONSIDERED TO BE RELEVANT**

| Category* | Citation of document, with indication, where appropriate, of the relevant passages | Relevant to claim No. |
|---|---|---|
| A | CN 110517041 A (MIGU CULTURE TECHNOLOGY CO., LTD.) 29 November 2019 (2019-11-29) <br> description, paragraphs 24-84 | 1-20 |
| A | CN 114567643 A (TENCENT TECHNOLOGY (SHENZHEN) CO., LTD.) 31 May 2022 (2022-05-31) <br> description, paragraphs 67-249 | 1-20 |
| A | CN 111681003 A (TENCENT TECHNOLOGY (SHENZHEN) CO., LTD.) 18 September 2020 (2020-09-18) <br> entire document | 1-20 |
| A | CN 113114759 A (HANGZHOU CHAINNET TECHNOLOGY CO., LTD.) 13 July 2021 (2021-07-13) <br> entire document | 1-20 |
| A | US 2021119807 A1 (ARCBLOCK, INC.) 22 April 2021 (2021-04-22) <br> entire document | 1-20 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 January 2024** | **01 February 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/124962** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2019141984 A1 (SETL DEVELOPMENT LIMITED) 25 July 2019 (2019-07-25)<br>entire document | 1-20 |

Form PCT/ISA/210 (second sheet) (July 2022)

**INTERNATIONAL SEARCH REPORT**
Information on patent family members

International application No.

**PCT/CN2023/124962**

| Patent document cited in search report | | | Publication date (day/month/year) | Patent family member(s) | | | Publication date (day/month/year) |
|---|---|---|---|---|---|---|---|
| CN | 110517041 | A | 29 November 2019 | CN | 110517041 | B | 03 June 2022 |
| CN | 114567643 | A | 31 May 2022 | HK | 40071423 | A0 | 11 November 2022 |
| | | | | CN | 114567643 | B | 23 May 2023 |
| CN | 111681003 | A | 18 September 2020 | HK | 40028473 | A0 | 05 February 2021 |
| | | | | CN | 111681003 | B | 25 June 2021 |
| CN | 113114759 | A | 13 July 2021 | CN | 113114759 | B | 10 June 2022 |
| US | 2021119807 | A1 | 22 April 2021 | US | 11388010 | B2 | 12 July 2022 |
| WO | 2019141984 | A1 | 25 July 2019 | GB | 201800761 | D0 | 28 February 2018 |
| | | | | GB | 2570301 | A | 24 July 2019 |

Form PCT/ISA/210 (patent family annex) (July 2022)

**REFERENCES CITED IN THE DESCRIPTION**

**Patent documents cited in the description**

- CN 2023100128428